# EUROPÄISCHE PATENTSCHRIFT

(11) **EP 4 479 255 B1**
(45) Veröffentlichungstag und Bekanntmachung des Hinweises auf die Patenterteilung: **31.12.2025**
(21) Anmeldenummer: 23705981.1
(22) Anmeldetag: 15.02.2023
(51) Int. Cl.: B60B 33/00

(54) **FORMSCHLUSS-VERSTELLEINRICHTUNG FÜR EINE ROLLE**
FORMFITTING ADJUSTMENT APPARATUS FOR A ROLLER
APPAREIL DE RÉGLAGE À COMPLÉMENTARITÉ DE FORME POUR UN ROULEAU

(30) Priorität: 17.02.2022 DE 102022103797
(43) Veröffentlichungstag der Anmeldung: 25.12.2024
(73) Patentinhaber: Tente GmbH & Co. KG, 42929 Wermelskirchen (DE)
(72) Erfinder: MOLOZIS, Athanasios, 44287 Dortmund (DE)
(74) Vertreter: Müller, Enno
(86) Internationale Anmeldenummer: PCT/EP2023/053687
(87) Internationale Veröffentlichungsnummer: WO 2023/156415

(56) Entgegenhaltungen:
- WO-A1-2008/148169
- WO-A1-2019/053004
- WO-A2-2006/040234
- DE-U1- 202017 100 939
- US-A1- 2009 113 671

## Beschreibung

### Gebiet der Technik

Die Erfindung betrifft eine Formschluss-Feststelleinrichtung für eine Rolle, mit einem Laufrad, einer Gabel und einem Drehblockier-Eingriffsteil, wobei das Laufrad der Rolle mit Bezug auf eine geometrische Laufradachse über die Formschluss-Feststelleinrichtung drehblockierbar ist, wobei weiter zur Verlagerung des Drehblockier-Eingriffsteils aus einer Ausgangsstellung in eine Eingriffsstellung eine erste Feder auf das Drehblockier-Eingriffsteil einwirkt und an einem verschwenkbaren Hebelteil gehaltert ist.

Auch betrifft die Erfindung eine Formschluss-Feststelleinrichtung für eine Rolle, mit einem Laufrad, einer Gabel und einem Drehblockier-Eingriffsteil, wobei das Laufrad der Rolle mit Bezug auf eine geometrische Laufradachse über die Formschluss-Feststelleinrichtung drehblockierbar ist, wobei weiter zur Verlagerung des Drehblockier-Eingriffsteils aus einer Ausgangsstellung in eine Eingriffsstellung und/oder aus der Eingriffsstellung in die Ausgangsstellung das Drehblockier-Eingriffsteil über ein Hebelteil betätigbar ist, wobei weiter das Hebelteil mittels eines Stößelteils beaufschlagbar ist und das Stößelteil gabelförmig gebildet ist, mit unterschiedlich langen Stößelfortsätzen, wobei nur ein Stößelfortsatz zur Einwirkung auf das Hebelteil angeordnet ist.

### Stand der Technik

Formschluss-Feststelleinrichtungen der in Rede stehenden Art sind bekannt, so insbesondere bei Rollen, aufweisend ein Laufrad und eine Gabel, weiter gegebenenfalls einen Montagezapfen. Über die Formschluss-Feststelleinrichtung ist das Laufrad der Rolle mit Bezug auf die geometrische Laufradachse drehblockierbar. Hierzu ist das Drehblockier-Eingriffsteil, das bei bekannten Lösungen beispielsweise gabel- oder montagezapfenseitig angeordnet ist, in eine Eingriffsstellung mit zumindest einem laufradseitigen Gegeneingriffsteil in Formschlussstellung. In diesem Zusammenhang ist es weiter bekannt, laufradseitig eine bezüglich der Laufradachse umlaufende Verzahnung zur Bildung des Gegeneingriffsteils vorzusehen, in die das Drehblockier-Eingriffsteil zur Aktivierung der Formschluss-Feststelleinrichtung eingreifen kann. Auch ist in diesem Zusammenhang bekannt, ein solches Drehblockier-Eingriffsteil in der Eingriffsstellung, wie gegebenenfalls aber auch in der Nichteingriffsstellung, über eine Feder vorgespannt zu belasten.

Beispielsweise wird in diesem Zusammenhang verwiesen auf die WO 2019/053 004 A1 (US 11 065 913 B2), aus welcher eine Rolle, hier eine Lenkrolle, die neben der Drehbeweglichkeit des Laufrades auch eine Schwenkbeweglichkeit der Rollengabel-Schwenkachse aufweist, bekannt ist, bei welcher Rolle das Drehblockier-Eingriffsteil zur Zusammenwirkung mit einem Zahnkranz des Laufrades im Wesentlichen quergerichtet zu einer Montagezapfenachse der Rolle verlagerbar ist, so weiter entsprechend bei üblicher Nutzung im Wesentlichen orientiert an einer horizontal ausgerichteten Linie. Die auf das Eingriffsteil einwirkende Feder wirkt zumindest in der Eingriffsstellung beziehungsweise einer vorbereiteten Eingriffsstellung auf das Drehblockier-Eingriffsteil ein.

Darüber hinaus ist es weiter bekannt, so weiter beispielsweise aus der vorgenannten WO 2019/053 004 A1, über ein, weiter beispielsweise im Bereich des Montagezapfens der Rolle geführtes und entlang einer Montagezapfenachse verlagerbares Stößelteil auf das Hebelteil der Formschluss-Feststelleinrichtung einzuwirken, zur Verlagerung des Drehblockier-Eingriffsteils aus der Ausgangsstellung in die Eingriffsstellung und/oder umgekehrt.

Aus der WO 2012/171 816 A1 (US 2014/0 109 342 A1) ist eine Formschluss-Feststelleinrichtung für eine Rolle bekannt, bei welcher eine erste Feder auf ein linear bewegbares Stößelteil wirkt und das Stößelteil auf ein Hebelteil einwirkt, das gegen die Wirkung einer zweiten Rückstellfeder ein Drehblockier-Eingriffsteil in eine Eingriffsstelle verlagert.

Bei einer aus der DE 10 2014 113 460 A1 bekannten Formschluss-Feststelleinrichtung wirkt eine erste Feder gegen ein Hebelteil zur linearen Verlagerung des Hebelteils. Eine zweite Feder, die auch zur Einwirkung auf das Hebelteil angeordnet ist, bewegt sich im Zuge einer Spannung oder Entspannung dieser Feder linear entsprechend dem Hebelteil.

Weiter ist zum Stand der Technik auf die DE 89 15 173 U1 (US 5 133 106 A) zu verweisen. Bei der hieraus bekannten Formschluss-Feststelleinrichtung ist ein linear bewegbares Eingriffsteil vorgesehen, das durch ein Keilgetriebe in die Eingriffsstellung verlagerbar ist. Aus der WO 2008/148169 A1 ist bekannt, dass mittels einer Feder auf ein einen Last- und Kraftarm bildendes Hebelteil eingewirkt wird. Aus der DE 20 2017 100 939 U1 ist es bekannt mittels eines Hebelteils auf ein Stößelteil einzuwirken.

### Zusammenfassung der Erfindung

Im Hinblick auf den vorbeschriebenen Stand der Technik, beschäftigt sich die Erfindung mit der Aufgabe, eine Formschluss-Feststelleinrichtung der in Rede stehenden Art vorteilhaft auszugestalten.

Diese Aufgabe ist zunächst beim Gegenstand des Anspruches 1 gelöst, wobei darauf abgestellt ist, dass die erste Feder einen Hebelarm bildet, dass mit der Verlagerung des Drehblockier-Eingriffsteils in die Eingriffsstellung eine zweite, an dem Hebelteil gehalterte, Feder zur Rückbewegung in die Ausgangsstellung spannbar ist und dass die erste Feder stärker ist als die zweite Feder.

Das Drehblockier-Eingriffsteil wird zur Verlagerung aus der Ausgangsstellung heraus in Richtung auf die Eingriffsstellung durch einen Hebelarm beaufschlagt, der Teil der ersten Feder ist und entsprechend selbst federbar ausgebildet ist, wobei die Federkraft der diesen Hebelarm bildenden ersten Feder so groß gewählt ist, dass mit der Verlagerung des Drehblockier-Eingriffsteils in Richtung auf die Eingriffsstellung die zweite Feder gespannt wird. Über die gespannte zweite Feder ist bei Fortfall einer auf das Hebelteil einwirkenden Belastung eine Rückführung des Hebelteils und über dieses bevorzugt auch des Drehblockier-Eingriffsteils zurück in die Ausgangsstellung erreichbar.

Bei einer üblichen Betätigung der Formschluss-Feststelleinrichtung, bei welcher das Drehblockier-Eingriffsteil widerstandsfrei in das laufradseitige Gegeneingriffsteil greifen kann, wirkt der aus der ersten Feder gebildete Hebelarm des Hebelteils im Wesentlichen starr auf das Drehblockier-Eingriffsteil zur Verlagerung desselben ein. Entsprechend ergibt sich bei einer solchen üblichen Betätigung (zunächst) allein eine Überwindung der Federkraft der im Zuge dieser Verlagerung eine Vorspannung zur Zurückstellung des Hebelteils aufbauenden zweiten, schwächeren Feder. Hieraus resultieren weiter in vorteilhafter Weise gegenüber dem bekannten Stand der Technik verringerte Schaltkräfte.

Bevorzugt alleine in einer Situation, in welcher das Drehblockier-Eingriffsteil nicht sogleich in das entsprechende Gegeneingriffsteil des Laufrades eingreifen kann, beispielsweise in einer Situation, in welcher Eingriffszähne des Drehblockier-Eingriffsteils auf Eingriffszähne des Gegeneingriffsteil stoßen, tritt zusätzlich zu der zweiten Feder auch die erste, den Hebelarm bildende Feder in Wirkung. Die sich dabei aufbauende Federkraft der ersten Feder bewirkt eine selbsttätige Verlagerung des Drehblockier-Eingriffsteils in die drehblockierende Eingriffsstellung sobald das Laufrad und somit das Gegeneingriffsteil um wenige Winkelgrade weiter gedreht ist, sodass die Eingriffszähne des Drehblockier-Eingriffsteils in die Zahntäler zwischen den Eingriffszähnen des Gegeneingriffsteils einfallen können.

Die genannte Aufgabe ist auch beim Gegenstandes des Anspruches 10 gelöst, wobei darauf abgestellt ist, dass die Stößelfortsätze sich bei einer üblichen Ausrichtung der Rolle im Wesentlichen in vertikaler Richtung erstrecken und dass die Stößelfortsätze sich beidseitig und entlang einer Montagezapfenachse eines Montagezapfens, der eine geometrische Schwenkachse umgibt, erstrecken.

Bei einer insgesamt beispielsweise im Wesentlichen U-förmigen Gestaltung des Stößelteils ergeben sich die Stößelfortsätze bildende, im Wesentlichen parallel zueinander ausgerichtete U-Schenkel, die weiter über einen U-Steg miteinander verbunden sind. Zwischen den U-Schenkeln kann sich ein Teilabschnitt des Laufrades erstrecken.

Üblicherweise, wie auch bevorzugt, ist das Drehblockier-Eingriffsteil aus der Ausgangsstellung in die Eingriffsstellung und zurück linear verlagerbar, weiter bevorzugt im Wesentlichen ausgehend von der geometrischen Laufradachse entlang einer, mit Bezug auf die übliche Nutzungsstellung der Rollen-Horizontallinie.

Die die Stößelfortsätze ausbildenden U-Schenkel des Stößelteils sind ausgehend von dem verbindenden U-Steg in ihrer in üblicher Nutzungsstellung im Wesentlichen vertikalen Erstreckung unterschiedlich lang gewählt. Dabei ist in der betriebsbereiten Anordnungsstellung nur einer der beiden Stößelfortsätze geeignet ausgebildet zur Einwirkung auf das Hebelteil der Formschluss-Feststelleinrichtung. Dies bietet in vorteilhafter Weise die Möglichkeit der Anordnung des Stößelteils in Rollen mit unterschiedlichen Laufrad-Durchmessern, wobei bei einem geringeren Laufrad-Durchmesser bevorzugt das Stößelteil so angeordnet ist, dass bevorzugt der kürzere Stößelfortsatz zur Einwirkung auf das Hebelteil der Formschluss-Feststelleinrichtung ausgerichtet ist und bei einem demgegenüber größeren Laufrad-Durchmesser zufolge entsprechender Anordnung des Stößelteils in der Rolle der längere Stößelfortsatz.

Bei einer üblichen Ausrichtung der Rolle erstrecken sich die Stößelfortsätze im Wesentlichen in vertikaler Richtung beidseitig und entlang einer Montagezapfenachse, welche Montagezapfenachse weiter bevorzugt den vorbeschriebenen U-Steg des Stößelteils im Wesentlichen mittig durchsetzen kann. Durch verdrehte Anordnung des Stößelteils um 180 Grad relativ zu der Montagezapfenachse ist jeweils nur der kürzere oder nur der längere Stößelfortsatz zur Einwirkung auf das Hebelteil der Formschluss-Feststelleinrichtung angeordnet.

Insbesondere in herstellungstechnisch vorteilhafter Weise können so im Wesentlichen mit Ausnahme der Gabel und des Laufrades unter Nutzung gleicher Komponenten, insbesondere bezüglich der Elemente zur Bildung des Montagezapfens sowie der Elemente zur Bildung der Formschluss-Feststelleinrichtung und bezüglich des Stößelteils, Rollen mit unterschiedlichen Laufrad-Durchmessern hergestellt werden.

Denkbar ist, dass die erste Feder durch einen Hebelarm des Hebelteils gebildet ist, dass mit der Verlagerung des Drehblockier-Eingriffsteils in die Eingriffsstellung eine zweite Feder zur Rückbewegung in die Ausgangsstellung spannbar ist und dass die erste Feder stärker ist als die zweite Feder, wobei weiter das Stößelteil gabelförmig gebildet ist, mit unterschiedlich langen Stößelfortsätzen, wobei nur ein Stößelfortsatz zur Einwirkung auf das Hebelteil angeordnet ist.

Ebenso denkbar ist, dass der Hebelarm als Federarm ausgebildet ist, insbesondere im Hinblick auf ein zunächst behindertes Einfallen der Eingriffszähne in die Zahntäler, wobei nur bevorzugt vorgesehen sein kann, dass mit der Verlagerung des Drehblockier-Eingriffsteils in die Eingriffsstellung eine zweite Feder zur Rückbewegung in die Ausgangsstellung spannbar ist und/oder dass die erste Feder stärker ist als die zweite Feder. Im Weiteren können aber auch dann die weiter beschriebenen Merkmale bezüglich der ersten beschriebenen Lösung einzeln oder kombiniert zusätzlich verwirklicht sein.

Merkmale der Erfindung sind nachstehend, auch in der Figurenbeschreibung, oftmals in ihrer bevorzugten Zuordnung zum Gegenstand des Anspruches 1 und/oder des Weiteren unabhängigen Anspruchs oder zu Merkmalen weiterer Ansprüche erläutert. Sie können aber auch in einer Zuordnung zu nur einzelnen Merkmalen des Anspruches 1 und/oder des Weiteren unabhängigen Anspruchs oder des jeweiligen weiteren Anspruchs oder jeweils unabhängig von Bedeutung sein.

In günstiger Weise können in der Ausgangsstellung der Formschluss-Feststelleinrichtung, d. h. in der Nichteingriffsstellung des Drehblockier-Eingriffsteils, sowohl die erste Feder als auch die zweite Feder im Wesentlichen entspannt sein. Zufolge dieser bevorzugten Ausgestaltung ist eine Belastung zumindest einer der beiden Federn, insbesondere der zweiten Feder, erst und allein im Zuge der Erlangung und Haltung der Eingriffsstellung gegeben. Hinsichtlich der ersten Feder kann darüber hinaus sogar in der Eingriffsstellung im Wesentlichen eine Entspannung gegeben sein.

Die erste Feder kann als Schenkelfeder ausgebildet sein. In weiterer Ausgestaltung kann auch die zweite Feder als Schenkelfeder ausgebildet sein. Eine solche Schenkelfeder weist üblicherweise zwei Federschenkel auf, wobei ein Federschenkel auf das abzufedernde Objekt, Drehblockier-Eingriffsteil beziehungsweise Hebelteil, wirkt und der andere Federschenkel an einem hierzu im Wesentlichen ortsfesten Abstützabschnitt anliegt.

So kann weiter die zweite Feder gemäß einer bevorzugten Ausgestaltung zwischen dem Hebelteil und einem gabelfesten Halterungsteil wirken. Das Halterungsteil kann ein gegenüber der Gabel gesondertes Teil sein, welches an der Gabel festlegbar ist. Dabei kann weiter das Halterungsteil so ausgelegt sein, dass dieses sowohl bei einer Gabel zur Aufnahme eines Laufrads mit größerem Durchmesser als auch bei einer Gabel zur Aufnahme eines Laufrads mit demgegenüber kleinerem Durchmesser genutzt werden kann. Das Halterungsteil kann entsprechend Teil der Formschluss-Feststelleinrichtung insgesamt sein, die, wie vorbeschrieben, für beide Laufraddurchmesser geeignet ausgebildet ist.

Bevorzugt wirken beide Federn, also sowohl die erste Feder als auch die zweite Feder, jeweils einendig, insbesondere über einen Federschenkel, auf das Hebelteil ein. Mit Bezug auf eine geometrische Drehachse des Hebelteils können die Federschenkel der beiden Federn gegebenenfalls, wie auch bevorzugt, in entgegengesetzte Richtungen auf das Hebelteil einwirken.

Die erste, stärkere Feder kann, wie auch bevorzugt, allein zwischen dem Hebelteil und dem Drehblockier-Eingriffsteil wirken. Es ergibt sich bevorzugt auch eine Drehmitnahme dieser ersten Feder zusammen mit dem Hebelteil bei einer entsprechenden Dreh-/Schwenkverlagerung des Hebelteils, wobei weiter der auf das Drehblockier-Eingriffsteil wirkende federnde Hebelarm dieser ersten Feder bei einer entsprechenden Gegenbelastung, beispielsweise bei einem Fehleingriff der Verzahnung ("Zahn-auf-Zahn-Stellung"), unter Aufbau einer Rückstell-Federkraft über das Drehblockier-Eingriffsteil belastbar ist.

In weiterer Ausgestaltung kann die zweite Feder insbesondere in einem Bereich zwischen dessen Federschenkeln, beispielsweise mit einem Wendelabschnitt, einen Halterungszapfen des Halterungsteils umfassen. Weiter bevorzugt nimmt dieser Halterungszapfen zentral die geometrische Schwenkachse des Halterungsteils auf.

Gemäß einer möglichen Weiterbildung kann die erste Feder, insbesondere mit einem dem Hebelteil zugeordneten Federschenkel, in einer Nut des Hebelteils geführt sein. Die Nut kann dabei hinsichtlich ihres Erstreckungsmaßes quer zur Längserstreckung des aufgenommenen Federschenkels an das Durchmessermaß des Federschenkels angepasst ausgebildet sein. Der Federschenkel kann im Wesentlichen lose in dieser Nut einliegen, gegebenenfalls aber auch in dieser klemmend aufgenommen sein.

Auch kann das Hebelteil insgesamt zwei Beaufschlagungsenden aufweisen. Ein Beaufschlagungsende kann dabei, wie auch bevorzugt, durch ein starres Anschlagteil gebildet sein, zur Einwirkung auf das Drehblockier-Eingriffsteil in Richtung auf die Ausgangsstellung. Dabei kann weiter ein Mitnahmeabschnitt des Drehblockier-Eingriffsteils im Wesentlichen zwischen diesem Beaufschlagungsende des Hebelteils und dem in Richtung auf die Eingriffsstellung wirkenden federbaren Hebelarm gefasst sein.

Ein weiteres Beaufschlagungsende des Hebelteils, welches mit Bezug auf die geometrische Drehachse des Hebelteils im Wesentlichen gegenüberliegend zu dem vorbeschriebenen ersten Beaufschlagungsende ausgebildet sein kann, wirkt in bevorzugter Ausgestaltung unmittelbar mit dem Stößelteil zusammen, über welches Stößelteil insgesamt die Formschluss-Feststelleinrichtung betätigbar ist.

Das an dem Montagezapfen und/oder an der Gabel geführt gehalterte Stößelteil ist in bevorzugter Ausgestaltung durch einen montagezapfenseitigen Schaltstößel beaufschlagbar. Dieser Schaltstößel erstreckt sich bevorzugt entlang einer im üblichen Betrieb der Rolle im Wesentlichen vertikal verlaufenden Zapfenachse und ist weiter bevorzugt entlang dieser Zapfenachse linear verlagerbar. Dabei kann in üblicher Weise über einen in dem Montagezapfen aufgenommenen Schaltnocken wiederum auf den Schaltstößel eingewirkt werden, um zumindest zwischen der Ausgangsstellung und der Eingriffsstellung des Drehblockier-Eingriffsteils zu schalten, darüber hinaus aber gegebenenfalls auch, wie auch bevorzugt, zur Einwirkung auf eine Schwenk-Feststelleinrichtung der Gabel.

Das Stößelteil kann mit einer zweiten Rückstellfeder in Zusammenwirkung sein. Diese zweite Rückstellfeder belastet das Stößelteil in Richtung auf eine Grundstellung, in welcher die Formschluss-Feststelleinrichtung, insbesondere das Drehblockier-Eingriffsteil, in ihrer Ausgangsstellung ruht. Die Belastung des Stößelteils zur Einwirkung und Verlagerung des Drehblockier-Eingriffsteils in die Eingriffsstellung erfolgt gegen die Rückstellkraft der zweiten Rückstellfeder. Dabei kann weiter die zweite Rückstellfeder eine gabelfeste Abstützung erfahren, gegebenenfalls im Bereich des gabelfesten Halterungsteils. Diese zweite Rückstellfeder kann, wie weiter bevorzugt, in Art einer Haarnadelfeder ausgebildet sein.

Der montagezapfenseitige Schaltstößel weist unabhängig von dem Stößelteil eine gesonderte erste Rückstellfeder auf, die bevorzugt im Bereich des Montagezapfens angeordnet ist. Dabei kann es sich um eine übliche ZylinderDruckfeder handeln, die weiter beispielsweise konzentrisch zur geometrischen Montagezapfenachse angeordnet sein kann.

Möglich ist diesbezüglich auch die Ausbildung der Rolle mit nur einer Rückstellfeder. So kann die bevorzugt unmittelbar auf das Stößelteil einwirkende (zweite) Rückstellfeder, bei entsprechender Einstellung der Federkraft, auch zur Rückstellung des über das Stößelteil dann mitzuschleppenden Schaltstößels genutzt sein. Weiter alternativ kann bei einer Verbindung von Schaltstößel und Stößelteil auch nur die dem Schaltstößel zugeordnete (erste) Rückstellfeder vorgesehen sein.

Weiter bevorzugt ist zur Verringerung der Schaltkräfte insgesamt nur im Bereich eines Gabelschenkels beziehungsweise im Bereich eines Stößelfortsatzes des Stößelteils eine solche zweite Rückstellfeder vorgesehen. So kann die zweite Rückstellfeder nur mit einem der Stößelfortsätze unmittelbar zusammenwirken, während der andere Stößelfortsatz ohne eine unmittelbare Beaufschlagung durch eine Rückstellfeder ist.

Die zweite Rückstellfeder kann stirnseitig unterseitig des kürzeren Stößelfortsatzes gegen das Stößelteil in Richtung auf dessen Grundstellung wirken. Der längere Stößelfortsatz kann eine Durchgriffsöffnung für die zweite Rückstellfeder aufweisen, wobei die Rückstellfeder bei entsprechender Ausrichtung des Stößelteils gegen eine in der üblichen Nutzungsstellung der Rolle obere Randkante der Öffnung wirkt.

Weiter bevorzugt ist nur einer der Stößelfortsätze des Stößelteils durch die zweite Rückstellfeder beaufschlagt, während der andere Stößelfortsatz ausgerichtet ist, zur möglichen Einwirkung auf das Hebelteil der Formschluss-Feststelleinrichtung.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: eine Rolle mit einer Formschluss-Feststelleinrichtung in perspektivischer Explosionsdarstellung;
- Fig. 2: die Rolle in einer weiteren perspektivischen Explosionsdarstellung;
- Fig. 3: den Bereich III in Figur 2 in einer weiteren perspektivischen Explosionsdarstellung;
- Fig. 4: ein Drehblockier-Eingriffsteil der Formschluss-Feststelleinrichtung in perspektivischer Einzeldarstellung;
- Fig. 5: die Ansicht gegen das Drehblockier-Eingriffsteil gemäß Pfeil V in Figur 4;
- Fig. 6: die Ansicht gegen das Drehblockier-Eingriffsteil gemäß Pfeil VI in Figur 4;
- Fig. 7: die Ansicht gegen das Drehblockier-Eingriffsteil gemäß Pfeil VII in Figur 6;
- Fig. 8: ein Hebelteil der Formschluss-Feststelleinrichtung in perspektivischer Einzeldarstellung;
- Fig. 9: die Ansicht gegen das Hebelteil gemäß Pfeil IX in Figur 8;
- Fig. 10: die Ansicht gegen das Hebelteil gemäß Pfeil X in Figur 9;
- Fig. 11: eine weitere Ansicht gegen das Hebelteil gemäß Pfeil XI in Figur 10;
- Fig. 12: das Hebelteil in einer weiteren perspektivischen Darstellung;
- Fig. 13: ein Halterungsteil der Formschluss-Feststelleinrichtung in perspektivischer Einzeldarstellung;
- Fig. 14: die Ansicht gegen das Halterungsteil gemäß Pfeil XIV in Figur 13;
- Fig. 15: die Ansicht gegen das Halterungsteil gemäß Pfeil XV in Figur 13;
- Fig. 16: die Formschluss-Feststelleinrichtung in perspektivischer Darstellung;
- Fig. 17: die Formschluss-Feststelleinrichtung in Ansicht gemäß Pfeil XVII in Figur 16;
- Fig. 18: die Formschluss-Feststelleinrichtung in einer weiteren perspektivischen Darstellung;
- Fig. 19: den Schnitt gemäß der Linie XIX-XIX in Figur 17;
- Fig. 20: den Schnitt gemäß der Linie XX-XX in Figur 17;
- Fig. 21: ein Stößelteil der Formschluss-Feststelleinrichtung in perspektivischer Einzeldarstellung;
- Fig. 22: den Schnitt gemäß der Schnittebene XXII in Figur 21;
- Fig. 23: den Schnitt durch die Rolle gemäß der Schnittebene XXIII in Figur 1, betreffend eine Ausgangsstellung der Formschluss-Feststelleinrichtung;
- Fig. 24: den Schnitt durch die Rolle gemäß der Linie XXIV-XXIV in Figur 23;
- Fig. 25: eine vergrößerte, entlang einer Drehachse eines Laufrads der Rolle ebenenversetzte Darstellung des Bereichs XXV in Figur 23;
- Fig. 26: eine Schnittdarstellung gemäß Figur 23, betreffend eine Eingriffsstellung der Formschluss-Feststelleinrichtung;
- Fig. 27: den vergrößerten Bereich XXVII in Figur 26 in einer entlang der Drehachse ebenenversetzten Darstellung;
- Fig. 28: eine der Figur 25 entsprechende Darstellung, jedoch betreffend die Eingriffsstellung gemäß Figur 26;
- Fig. 29: eine der Figur 28 entsprechende Darstellung, jedoch betreffend eine vorbereitete Eingriffsstellung;
- Fig. 30: eine Detailvergrößerung gemäß Figur 27, jedoch betreffend die vorbereitete Eingriffsstellung gemäß Figur 29;
- Fig. 31: eine Schnittdarstellung durch die Rolle gemäß Figur 24, jedoch betreffend eine zweite Ausführungsform eines Stößelteils der Formschluss-Feststelleinrichtung;
- Fig. 32: das Stößelteil der Ausführungsform gemäß Figur 31 in perspektivischer Einzeldarstellung;
- Fig. 33: den Schnitt gemäß der Schnittebene XXXIII in Figur 32;
- Fig. 34: eine Schnittdarstellung gemäß Figur 31, jedoch betreffend eine geänderte Anordnung des Stößelteils der zweiten Ausführungsform.

### Beschreibung der Ausführungsformen

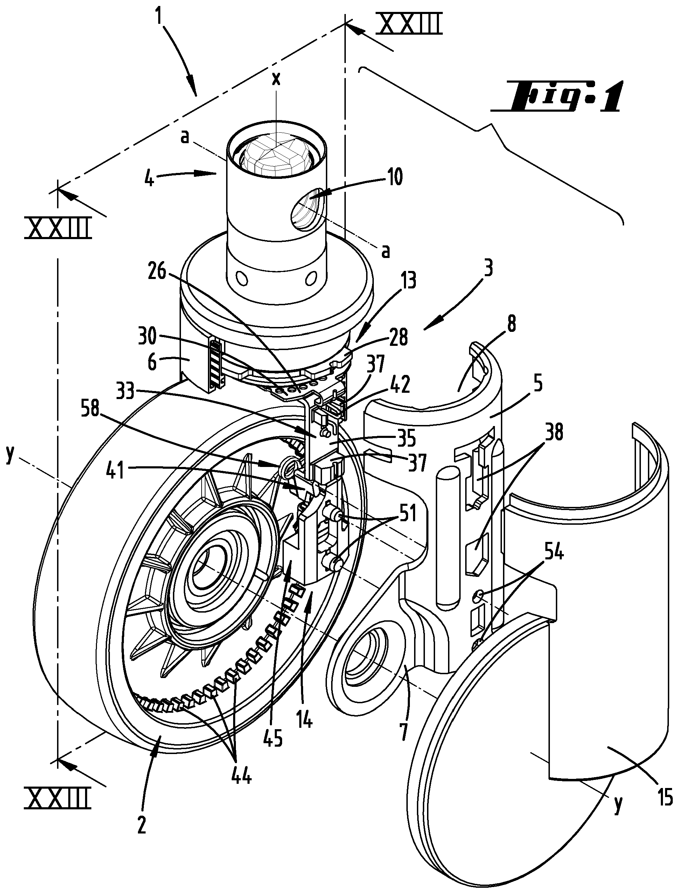

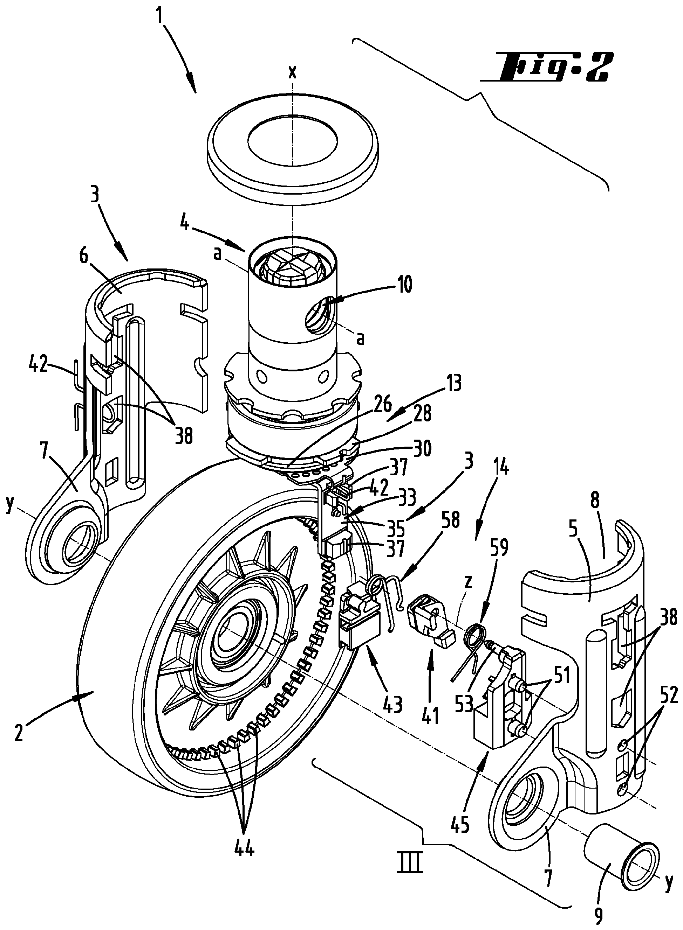

Dargestellt und beschrieben ist, zunächst mit Bezug zu den Figuren 1 und 2, eine Rolle 1, welche in den dargestellten Ausführungsformen in Art einer Lenkrolle ausgebildet ist.

Die Rolle 1 weist im Wesentlichen ein Laufrad 2 sowie eine Gabel 3 auf, von welcher ein zylinderförmig ausgestalteter Montagezapfen 4 ausgeht. Der Montagezapfen 4 umgibt eine geometrische Schwenkachse x, die mit Bezug auf das Laufrad 2 im üblichen Nutzungszustand der Rolle 1 vertikal nach oben abragt.

Die Gabel 3 kann, wie auch dargestellt, im Wesentlichen aus zwei Gabel-Schalenteilen 5, 6 gebildet sein, wobei jedes Gabel-Schalenteil 5, 6 einen Gabelschenkel 7 trägt.

Die Gabel-Schalenteile 5, 6 der Gabel 3 fassen mit ihren bevorzugt in Richtung einer Drehachse y im Wesentlichen deckungsgleichen Gabelschenkeln 7 das in der bevorzugt vorgesehenen Gabelhöhlung 8 gelagerte Laufrad 2. Zur Lagerung des Laufrades 2 kann gemäß dem dargestellten Ausführungsbeispiel eine Hohlachse 9 dienen, welche das Laufrad 2 zentrisch durchsetzt und bevorzugt jeweils endseitig an den Gabelschenkeln 7 gehaltert ist. Die sich ergebende geometrische Drehachse y des Laufrads 2 erstreckt sich bevorzugt und im Wesentlichen quergerichtet zu der Schwenkachse x und somit im üblichen Nutzungsbetrieb der Rolle 1 im Wesentlichen in einer Horizontalebene.

Die dargestellte Rolle 1 kann beispielsweise an einem Krankenhausbett oder dergleichen positioniert sein. Die Festlegung kann in üblicher Weise unter Nutzung des Montagezapfens 4 erfolgen.

In dem Montagezapfen 4 kann weiter im Bereich eines nach oben weisenden freien Endes ein um eine Betätigungsachse a schwenkbeweglich angeordneter Schaltnocken 10 vorgesehen sein. Dabei kann sich die Betätigungsachse a im Wesentlichen rechtwinklig zu der Schwenkachse x der Rolle 1 erstrecken. Zur Drehmitnahme des Schaltnockens 10 kann der Schaltnocken 10 eine zentrisch angeordnete unrunde, gemäß dem dargestellten Ausführungsbeispiel gegebenenfalls sechskantartige Kupplungsöffnung 11 aufweisen, welche zur Betätigung von einem nicht dargestellten Schalthebelschaft durchsetzt sein kann.

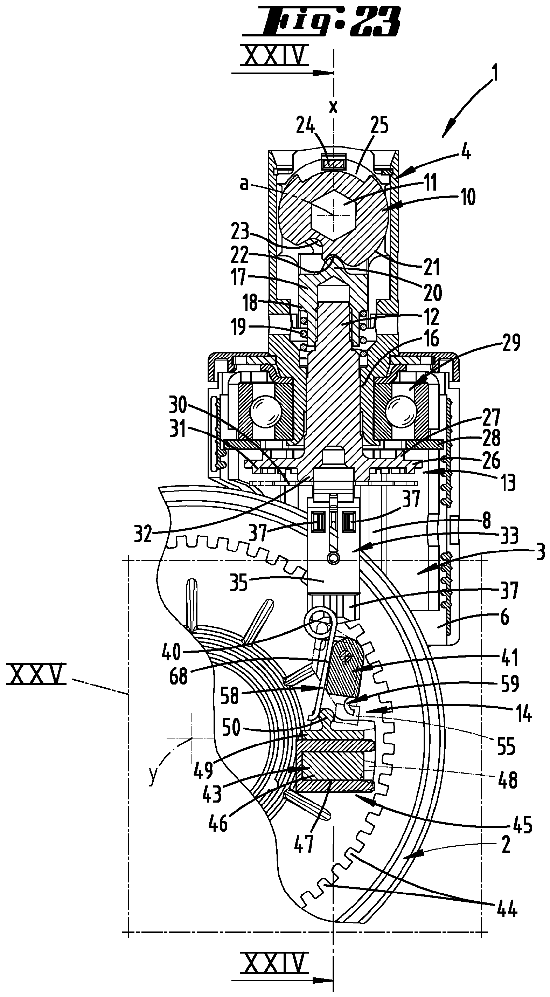

Bezogen beispielsweise auf die Darstellung in Figur 23 ist unterhalb des Schaltnockens 10 ein Schaltstößel 12 vorgesehen, über welchen wahlweise eine Schwenk-Feststelleinrichtung 13 und/oder eine Formschluss-Feststelleinrichtung 14 betätigt beziehungsweise gelöst werden kann.

Insbesondere das Eingerichte der Schwenk-Feststelleinrichtung 13 sowie der Formschluss-Feststelleinrichtung 14, darüber hinaus aber auch die Gabel-Schalenteile 5 und 6 können gemäß der Darstellung in Figur 1 durch darüber hinaus auch den Nabenbereich des Laufrads 2 überfangende Gehäuseschalen 15 überdeckt sein.

Der Schaltstößel 12 ist in dem Montagezapfen 4 bevorzugt um die Schwenkachse x ausgerichtet und dabei bevorzugt drehgesichert vertikal verlagerbar. Hierzu kann der Montagezapfen 4 einen ebenfalls bevorzugt um die Schwenkachse x ausgerichteten durchmesserreduzierten Gang 16 aufweisen, der gegebenenfalls zur Führung querschnittsmäßig angepasst sein kann an den Schaltstößel 12.

Wie beispielsweise Figur 23 zeigt, kann das zwischen der Öffnung des Ganges 16 und dem Schaltnocken 10 ausgebildete freie Ende des Schaltstößels 12 mit einem Nockenteil 17 beispielsweise schraubverbunden sein. Das Nockenteil 17 kann hierbei bevorzugt eine topfartige Gestalt mit einem weiter bevorzugt kreisrunden Querschnitt aufweisen, wobei an dem dem Schaltstößel 12 abgewandten Ende ein durchmesservergrößerter Bereich als Ringkragen 18 ausgebildet sein kann. Darüber hinaus ist das Nockenteil 17 des Schaltstößels 12 innerhalb des Montagezapfens 4, bezogen auf die Darstellungen, bevorzugt vertikal entlang der Schwenkachse x geführt.

Darüber hinaus kann der gegenüber dem Ringkragen 18 durchmesserreduzierte Abschnitt des Nockenteils 17 von einer ersten Rückstellfeder 19 umgeben sein, wobei sich das eine Ende der ersten Rückstellfeder 19 an der Unterseite des Ringkragens 18 abstützen kann. Das andere gegenüberliegende Federende kann sich an einem Rand des Ganges 16 abstützen. Somit kann vorgesehen sein, dass der Schaltstößel 12 in Richtung des Schaltnockens 10 mittels der ersten Rückstellfeder 19 federkraftbelastet ist. Darüber hinaus kann, wie auch bevorzugt, die dem Schaltnocken 10 zugewandte Stirnfläche des gegebenenfalls vorgesehenen Ringkragens 18 eine zentrische Ausformung in Form eines Gegennockens 20 aufweisen.

Der Schaltstößel 12 wirkt mit dem bevorzugt vorgesehenen Gegennocken 20 mit der zugewandten Steuerfläche 21 des Schaltnockens 10 zusammen, welche Steuerfläche 21 weiter zwei in Umfangsrichtung des Schaltnockens 10 hintereinander angeordnete, bezüglich des radialen Abstandes zu der Betätigungsachse a unterschiedlich tiefe Steuermulden 22 und 23 aufweisen kann.

Der Schaltnocken 10 ist in seiner in Umfangsrichtung der Steuerfläche 21 betrachteten Schwenkbeweglichkeit anschlagbegrenzt. Hierzu kann, wie dargestellt, ein montagezapfenseitiger Anschlagvorsprung 24 in eine entsprechend vorgesehene Umfangsnut 25 des Schaltnockens 10 eingreifen. Wie beispielsweise aus der Darstellung in Figur 23 ersichtlich ist die Umfangsnut 25 im Wesentlichen etwa mit Bezug zu der Betätigungsachse a gegenüberliegend zu den Steuermulden 22 und 23 vorgesehen, wobei weiter sich die in Umfangsrichtung verlaufende Umfangsnut 25 über einen Winkelbereich von etwa 90 Grad erstreckt.

Der Schaltstößel 12 erstreckt sich in Richtung auf das Laufrad 2 gesehen bevorzugt in Richtung der Gabelhöhlung 8 oder bis in diese hinein. Die Gabelhöhlung 8 umgibt bevorzugt eine im Querschnitt kreisrunde Ausformung des Schaltstößels 12, welche Ausformung durchmessergrößer sein kann als ein oberer Bereich des Schaltstößels 12. Die Ausformung kann die Funktion eines Rasttellers 26 übernehmen, welche die Schwenkachse x umgebend quer zur dieser an dem Schaltstößel 12 ausgeformt sein kann.

Der Rastteller 26 kann auf seiner dem Schaltnocken 10 zugewandten Tellerfläche Rastausformungen 27 aufweisen. Diese Rastausformungen 27 können in einer sogenannten Bockrollenstellung, in welcher die Gabel 3 mit dem Laufrad 2 bevorzugt nur zwei um 180 Grad zueinander versetzte Stellungen relativ zu dem Montagezapfen 4 einnehmen kann, bedingt durch die Federkraft der ersten Rückstellfeder 19 flächig gegen die Unterseite eines Richtungs-Feststellungsteils 28 gedrückt sein. Das Richtungs-Feststellungteil 28 kann dabei insbesondere an der Gabel 3 festgelegt sein, weiter beispielsweise in einem Bereich, in welchem die Gabel 3 insgesamt über ein Lager 29 an dem Montagezapfen 4 und relativ zu diesem um die Schwenkachse x schwenkbeweglich gehaltert ist.

Der Rastteller 26 mit seinen Rastausformungen 27, das Richtungs-Feststellungsteil 28 sowie ein nachstehend noch weiter beschriebenes Drehblockierungsteil 30 sind im Wesentlichen Teil der Schwenk-Feststelleinrichtung 13.

Die Bockrollenstellung kann durch Verdrehen des Schaltnockens 10 in eine Zusammenwirkstellung des Gegennockens 20 mit der Steuermulde 23, oder einer sonstigen gleichwertigen Ausformung, einnehmbar sein. Die Bockrollenstellung kann dabei gegenüber der in Figur 23 dargestellten Neutralstellung, in welcher der Gegennocken 20 in die weitere Steuermulde 22 eingreift, zufolge der gegebenen Federkraftbeaufschlagung über die erste Rückstellfeder 19 mit Bezug zu den Figuren ein Anheben des Nockenteils 17 sowie des Schaltstößels 12 und damit auch des Rasttellers 26 in die Zusammenwirkstellung mit dem Richtungs-Feststellungsteils 28 bewirken.

An der den Rastausformungen 27 abgewandten Unterseite des Rasttellers 26 kann der Schaltstößel 12 weiter Dreh-Blockierungsvorsprünge 31 besitzen. Diese können beispielsweise koaxial zu der Schwenkachse x jeweils in Umfangsrichtung des Rasttellers 26 verlaufen.

Von dem Rastteller 26 kann dem Schaltstößel 12, in Richtung des Laufrades 2 gesehen, ein gegenüber dem Rastteller 26 durchmesserreduzierter, bevorzugt kreisrunder, zylinderförmiger Fortsatz 32 entspringen, welcher seinerseits in einer zentrisch angeordneten Durchtrittsöffnung des um die Schwenkachse x angeordneten Drehblockierungsteils 30 führungstechnisch einliegen kann. Das zwischen dem Laufrad 2 und dem Rastteller 26 in der Gabelhöhlung 8 einliegende Drehblockierungsteil 30 kann ebenfalls wie das Richtungs-Feststellungsteil 28 drehfest mit der Gabel 3 gehaltert und beispielsweise als Stanzbiegeteil ausgebildet sein.

Das Dreh-Blockierungsteil 30 kann an die Geometrie der Dreh-Blockierungsvorsprünge 31 angepasste Blockierungsaufnahmen aufweisen. Bevorzugt ist das Dreh-Blockierungsteil 30 über im Wesentlichen in Richtung der Schwenkachse x wirkende Federelemente 70 gabelseitig abgestützt.

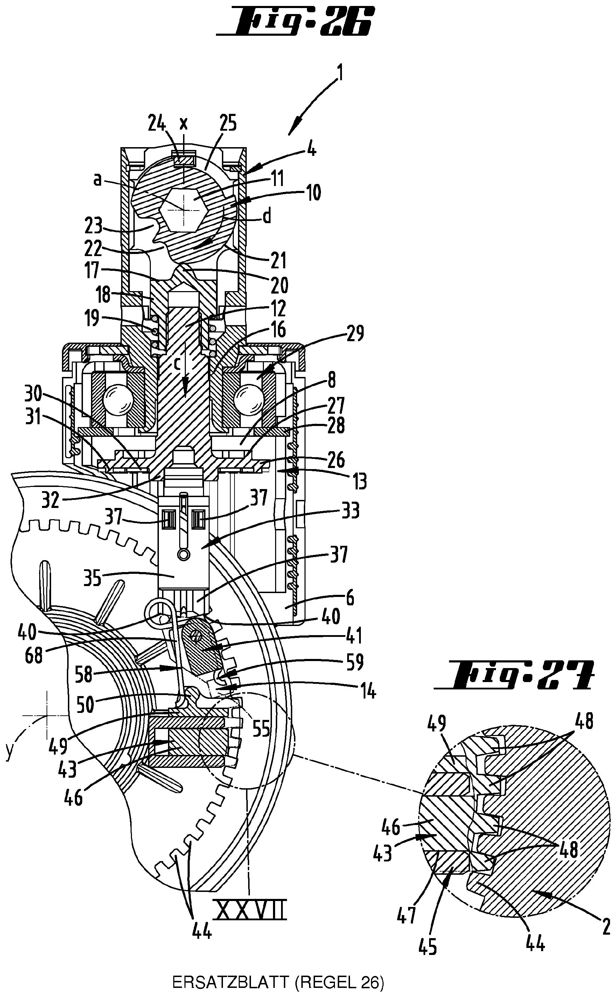

Zufolge Zusammenwirkung von Drehblockierungsvorsprüngen 31 des Rasttellers 26 und Blockierungsaufnahmen in dem Dreh-Blockierungsteil 30 kann die Rolle 1 in unterschiedlichen Schwenkpositionen um die Schwenkachse x festlegbar sein. Hierzu kann der Schaltnocken 10 in eine Position um dessen Betätigungsachse a zu schwenken sein, in welcher der Gegennocken 20 gemäß der Darstellung in Figur 26 gegen die in Umfangsrichtung radial außen sich erstreckende Steuerfläche 21 des Schaltnockens 10 tritt. Der Gegennocken 20 kann zusammen mit dem Schaltstößel 12 entgegen der Kraft der ersten Rückstellfeder 19 mit Bezug auf die Darstellungen nach unten bewegt werden. Die Drehblockierungsvorsprünge 31 können schwenkhindernd in die zugeordneten Blockierungsaufnahmen eingreifen.

Zugleich kann, wie auch bevorzugt, in dieser Stellung auch eine Drehfeststellung des Laufrades 2 erreicht sein. Hierzu dient die Formschluss-Feststelleinrichtung 14.

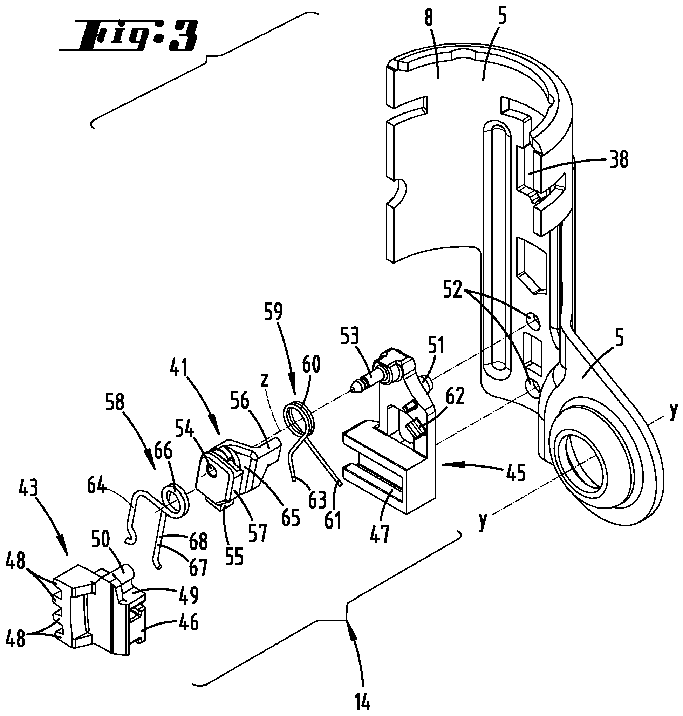

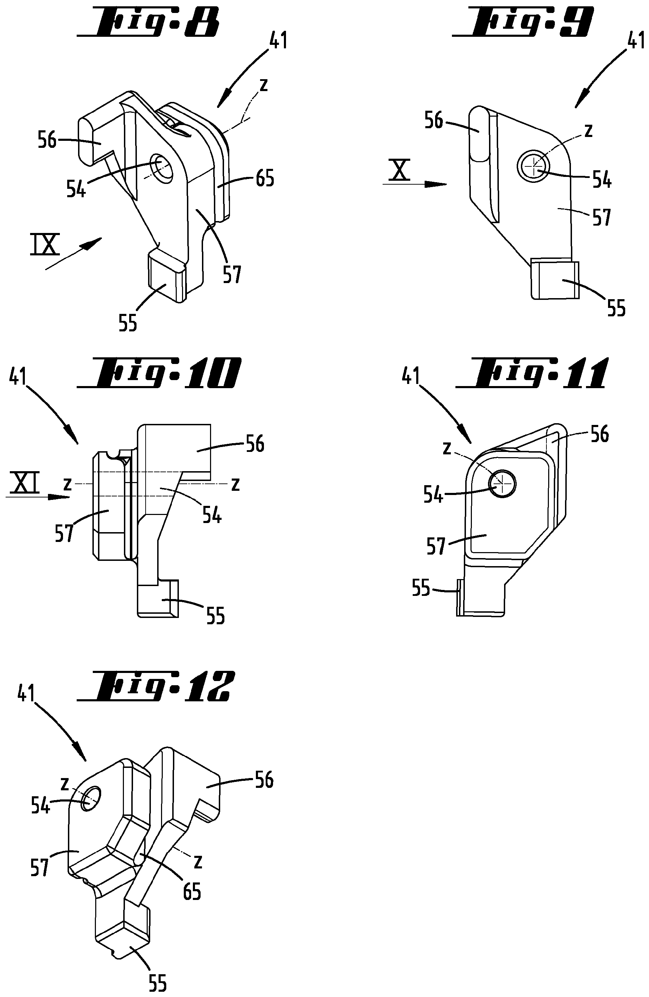

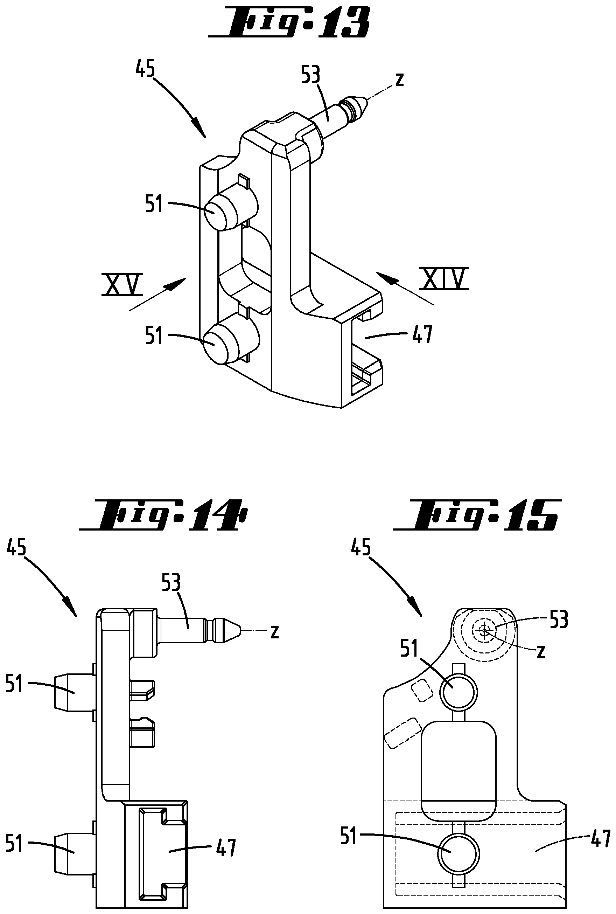

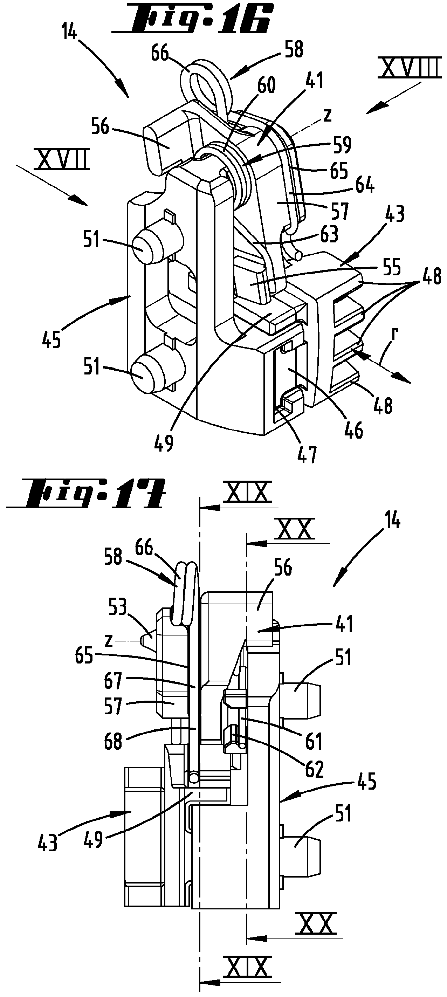

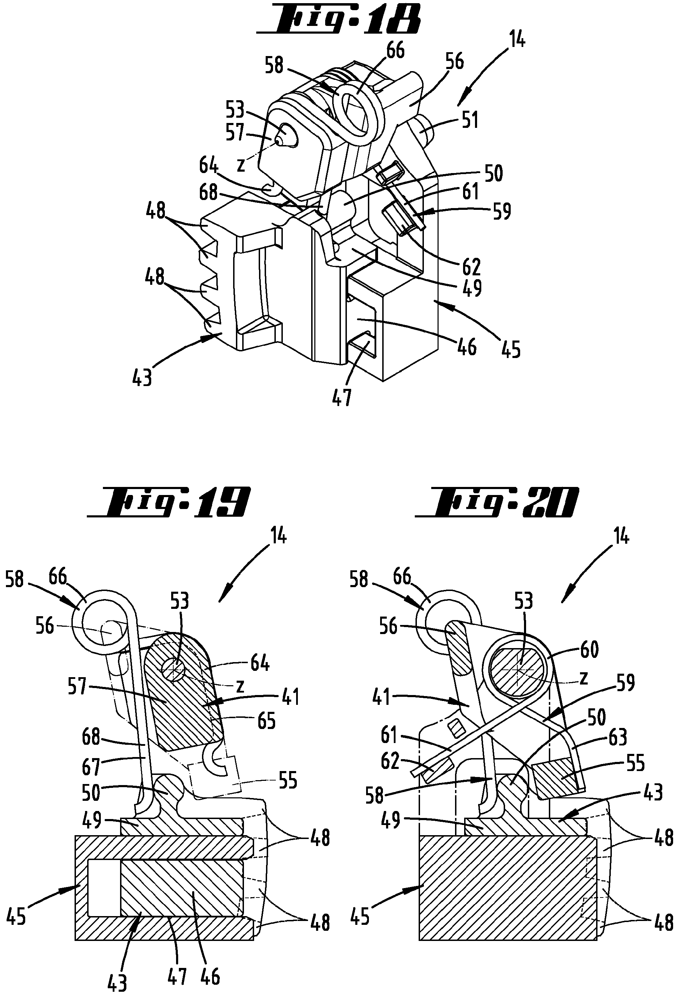

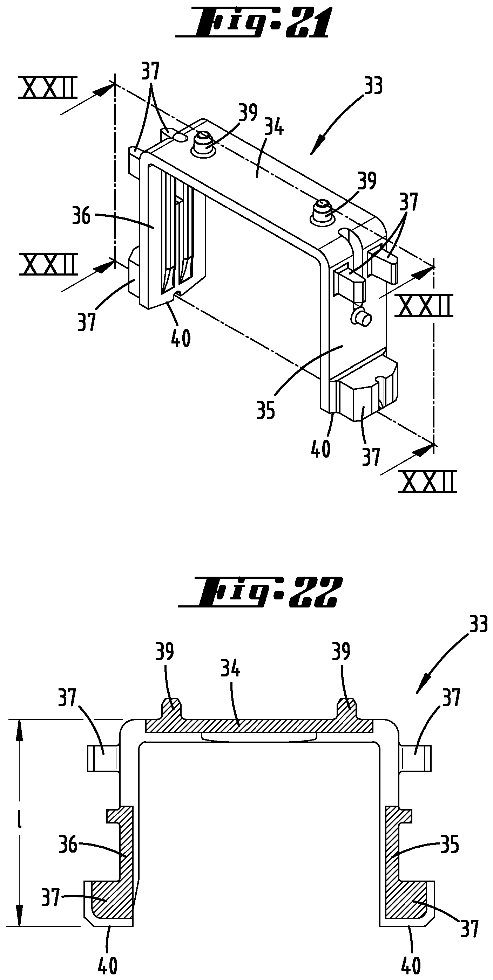

Teil der Formschluss-Feststelleinrichtung 14 ist ein gabelförmig gebildetes Stößelteil 33, welches in einer ersten Ausführungsform in den Figuren 21 und 22 in Einzeldarstellungen gezeigt ist und in einer Rolle 1 gemäß den Darstellungen in den Figuren 1 bis 30 Verwendung findet.

Das Stößelteil 33 weist einen U-stegartigen Brückenabschnitt 34 auf, welcher sich in der üblichen Anordnungsstellung im Bereich der Gabelhöhlung 8 unterseitig des Fortsatzes 32 des Schaltstößels 12 in einer Richtung quer zur Schwenkachse x erstreckt. Dieser Brückenabschnitt 34 ist im Wesentlichen zentral durchsetzt von der Schwenkachse x und trägt jeweils endseitig im Wesentlichen in Ausrichtung der Schwenkachse x sich nach unten, abgewandt dem Schaltstößel 12, erstreckende Stößelfortsätze 35 und 36. Es ergibt sich mit den Stößelfortsätzen 35, 36 und dem Brückenabschnitt 34 eine insgesamt im Wesentlichen U-Gestaltung des Stößelteils 33, wobei die U-Öffnung durchsetzt ist von der Lauffläche des Laufrades 2, sodass sich die Stößelfortsätze 35 und 36 beidseitig des Laufrades 2 erstrecken.

In weiterer Ausgestaltung ist das Stößelteil 33 über die Stößelfortsätze 35 und 36 linear in Ausrichtung der Schwenkachse x geführt. Hierzu weisen die Stößelfortsätze 35 und 36 nach außen gerichtete Führungsvorsprünge 37 auf, die in entsprechend positionierte Führungsöffnungen 38 im Bereich der Gabel-Schalenteile 5, 6 eingreifen. Die Führungsöffnungen 38 sind dabei weiter derart ausgebildet, dass diese bei entsprechendem Eingriff der Führungsvorsprünge 37 eine begrenzte Verlagerbarkeit des Stößelteils 33 insgesamt entlang der Schwenkachse x erlauben.

Oberseitig des Brückenabschnitts 34 kann das Stößelteil 33 Zapfen 39 tragen, die in entsprechend positionierte und angepasst ausgebildete Öffnungen des Dreh-Blockierungsteils 30 eingreifen können, womit das Dreh-Blockierungsteil 30 drehfest mit der Gabel 3 über das Stößelteil 33 verbunden ist.

Mit Bezug auf eine Seitenansicht gegen das Stößelteil 33, insbesondere gegen einen Stößelfortsatz 35, 36, in welcher Seitenansicht sich die Drehachse y des Laufrades 2 als Punkt und die Schwenkachse x als Linie darstellt, ergeben sich unterseitig des jeweils freien Endes eines Stößelfortsatzes 35, 36 schräg verlaufende Steuerflächen 40, zur Einwirkung auf ein Hebelteil 41 der Formschluss-Feststelleinrichtung 14.

In bevorzugter Ausgestaltung erfolgt eine mit Bezug auf die Darstellungen, beispielsweise in Figur 23, nach unten gerichtete Bewegung des Stößelteils 33 durch beaufschlagende Mitnahme über den Schaltstößel 12. Es ergibt sich jedoch bevorzugt kein Formschluss, der es erlauben würde, das Stößelteil 33 zufolge der Federbeaufschlagung über die erste Rückstellfeder 19 zusammen mit dem Schaltstößel 12 zurück in die Neutralstellung, entsprechend mit Bezug zu der Figur 23 nach oben, mitzuschleppen. Vielmehr ist hierzu eine gesonderte zweite Rückstellfeder 42, beispielsweise in Art einer Haarnadelfeder, vorgesehen, die in einem Gabel-Schalenteil 5, 6 gehaltert ist und mit ihrem Federarm gegen einen der Stößelfortsätze 35, 36 wirkt. Bevorzugt wirkt die zweite Rückstellfeder 42 mit dem Stößelfortsatz zusammen, der zufolge der Anordnung des Stößelteils 33 nicht zur unmittelbaren Zusammenwirkung mit dem Hebelteil 41 ausgelegt ist.

Bei der in den Figuren 1 bis 30 dargestellten ersten Ausführungsform wirkt die zweite Rückstellfeder 42 bei gleichlang ausgebildeten Stößelfortsätzen 35 und 36 unterseitig gegen den Stößelfortsatz 36, der nicht dazu positioniert ist, auf das Hebelteil 41 der Formschluss-Feststelleinrichtung 14 einzuwirken.

Beide Rückstellfedern 19 und 42 wirken im Wesentlichen in dieselbe Richtung, nämlich mit Bezug zu den Darstellungen, beispielsweise Figur 23, in Ausrichtung der Schwenkachse x nach oben in Richtung auf den Schaltnocken 10. Es ergibt sich bevorzugt eine voneinander unabhängige Federbeaufschlagung von Schaltstößel 12 und Stößelteil 33.

Neben dem Hebelteil 41 ist ein weiterer wesentlicher Bestandteil der Formschluss-Feststelleinrichtung 14 ein Drehblockier-Eingriffsteil 43, welches bevorzugt ausgebildet ist zur Zusammenwirkung mit einer laufradinnenseitig vorgesehenen, umlaufenden Verzahnung 44.

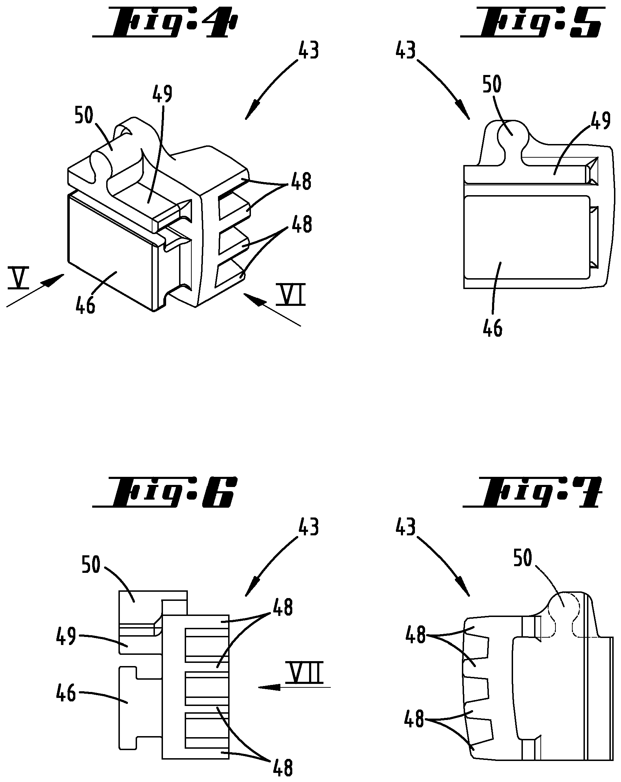

Das Drehblockier-Eingriffsteil 43 kann an einem gabelschenkelseitig festgelegten Halterungsteil 45 schiebebeweglich gelagert sein. Die Schiebebeweglichkeit ist insbesondere durch einen in einem Querschnitt quer zu einer Verlagerungsrichtung r des Drehblockier-Eingriffsteils 43 T-förmig gestalteten Gleitfortsatz 46 gegeben, der in einer querschnittangepassten Gleitaufnahme 47 des Halterungsteils 45 geführt ist (vergleiche beispielsweise Figuren 4, 13 und 16).

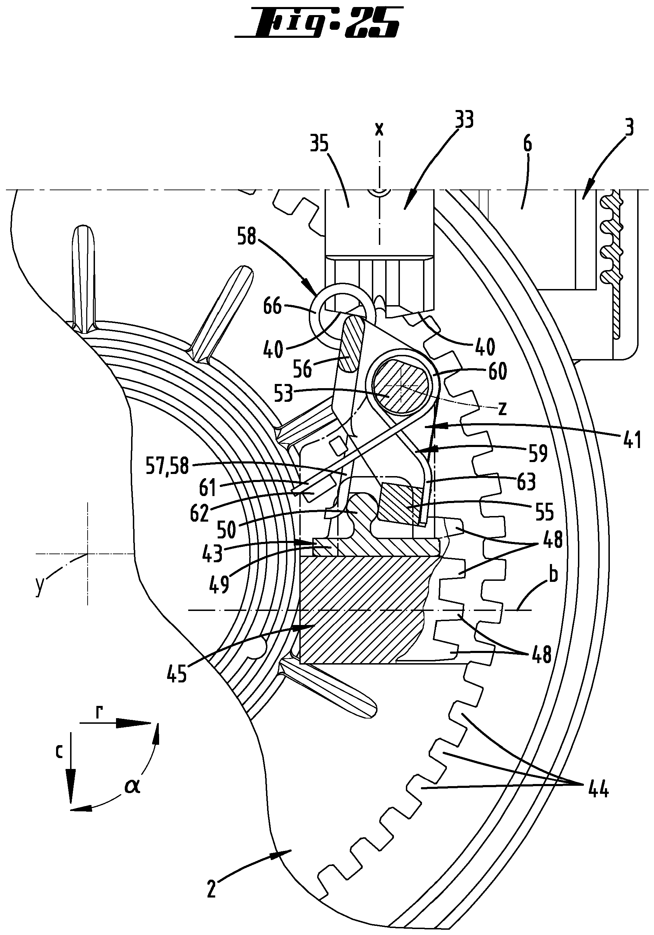

Die Anordnung und Ausrichtung des Drehblockier-Eingriffsteils 43 kann weiter so gewählt sein, dass das Drehblockier-Eingriffsteil 43 entlang einer in einer Seitenansicht beispielsweise gemäß Figur 25 senkrecht zu der Schwenkachse x ausgerichteten Linie b bewegbar sein kann. Es handelt sich dabei bevorzugt um eine in üblicher Ausrichtung der Rolle 1 im Wesentlichen horizontale Linie b, sodass mit Bezug auf eine Projektion in eine Ebene, in welcher die Drehachse y sich als Punkt darstellt, entsprechend beispielsweise gemäß Figur 25, die Verlagerungsrichtung r des Drehblockier-Eingriffsteils 43 im Wesentlichen einen rechten Winkel α zu der Bewegungsrichtung c des Schaltstößels 12 sowie des Stößelteils 33 einschließt.

Zugewandt der Verzahnung 44 des Laufrads 2 weist das Drehblockier-Eingriffsteil 43 in Ausrichtung der Drehachse y ebenenversetzt zu dem Gleitfortsatz 46 zwei oder mehr, in dem dargestellten Ausführungsbeispiel vier, in Umfangsrichtung des Laufrads 2 zueinander beabstandete, in ihrem Abstand und in ihrer Ausgestaltung an die Verzahnung 44 angepasste Sperrzähne 48 auf.

Im Einbau- und Nutzungszustand oberhalb des Gleitfortsatzes 46 und mit vertikalem Abstand zu diesem trägt das Drehblockier-Eingriffsteil 43 weiter einen im Nutzungszustand gegebenenfalls auf der Gleitaufnahme 47 des Halterungsteils 45 aufliegenden und über diese Gleitaufnahme 47 gleitenden, plattenartigen Stützabschnitt 49, auf welchem Stützabschnitt 49 wiederum ein nockenartiger Mitnahmevorsprung 50 ausgeformt ist. Der Mitnahmevorsprung 50 dient zur Zusammenwirkung mit dem Hebelteil 41.

Das Halterungsteil 45 ist innenseitig eines der Gabel-Schalenteile 5, 6 angeordnet und gehaltert, wozu das Halterungsteil 45 nach außen weisende Befestigungszapfen 51 aufweisen kann, die in entsprechend positionierte Aufnahmeöffnungen 52 des Gabel-Schalenteils 5 halternd greifen.

Entgegengesetzt zu den Befestigungszapfen 51 entsprechend nach innen weisend trägt das Halterungsteil 45 einen Halterungszapfen 53. Auf diesem ist unter Durchsetzung einer entsprechend positionierten Zapfenaufnahme 54 das Hebelteil 41 um eine parallel zu der Drehachse y senkrecht zur Verlagerungsrichtung r des Drehblockier-Eingriffsteils 43 ausgerichtete Schwenkachse z schwenkbeweglich gehaltert.

Das Hebelteil 41 weist ein erstes Beaufschlagungsende 55 auf, zur Zusammenwirkung mit dem Mitnahmevorsprung 50 des Drehblockier-Eingriffsteils 43. Darüber hinaus ist ausgehend von diesem ersten Beaufschlagungsende 55 jenseits der Zapfenaufnahme 54 ein weiteres, zweites Beaufschlagungsende 56 in Form einer sich etwa in Ausrichtung der Schwenkachse z erstreckenden Schulter ausgeformt. Dieses zweite Beaufschlagungsende 56 dient zur Zusammenwirkung mit dem Stößelteil 33, insbesondere mit der Steuerfläche 40 des zugeordneten Stößelfortsatzes.

Hebelteil 41 und Drehblockier-Eingriffsteil 43 sind bevorzugt, wie auch dargestellt und beschrieben, zusammen an dem Halterungsteil 45 schiebe- beziehungsweise drehgehaltert. Dabei ist weiter bevorzugt vorgesehen, dass die so gestaltete Formschluss-Feststelleinrichtung 14 lediglich einseitig, zugeordnet nur einem Gabelschenkel 7, weiter insbesondere nur einem Gabel-Schalenteil 5 vorgesehen ist.

In Form einer sich in Erstreckungsrichtung der Schwenkachse z an den die Beaufschlagungsenden 55 und 56 aufweisenden Bereich anschließenden Verdickung des Hebelteils 41 ist weiter einstückig und bevorzugt materialeinheitlich mit den Beaufschlagungsenden 55 und 56 ein Anlageblock 57 angeformt.

Weiter sind bevorzugt Bestandteil der Formschluss-Feststelleinrichtung 14 zwei Federn, welche beide bevorzugt in Art von Schenkelfedern ausgebildet sind. So ist zunächst eine erste Feder 58 vorgesehen, die zwischen dem Hebelteil 41 und dem Drehblockier-Eingriffsteil 43 wirkt, und eine zweite Feder 59, die zwischen dem Hebelteil 41 und dem gabelfesten Halterungsteil 45 wirkt.

Ausgehend von einem mittigen, von dem Halterungszapfen 53 aufgenommenen Windungsabschnitt 60 erstreckt sich bezüglich der zweiten Feder 59 ein Federschenkel 61 unter Anlage an einem Stützbock 62 des gabelfesten Halterungsteils 45, während der andere Federschenkel 63 sich im Bereich des ersten Beaufschlagungsendes 55 des Hebelteils 41 abstützt, sodass sich hierdurch eine entsprechende Federbelastung des Hebelteils 41 in Richtung auf eine den Freilauf des Laufrades 2 erlaubende Ausgangsstellung beziehungsweise Grundstellung ergibt.

Ein Federschenkel 64 der ersten Feder 58 ist im Bereich des Anlageblocks 57 des Hebelteils 41 in einer Nut 65 geführt, darüber hinaus gegebenenfalls auch klemmgehaltert. Dabei wirkt dieser Federschenkel 64 auf einen dem zweiten Beaufschlagungsende 55 des Hebelteils 41 abgewandten Bereich des Anlageblocks 57 ein, wohingegen im Wesentlichen zugeordnet dem zweiten Beaufschlagungsende 56 sich der diesbezügliche Windungsabschnitt 66 ergibt, aus welchem heraus der weitere Federschenkel 67 erwächst, der einen Hebelarm 68 des Hebelteils 41 bildend zur Einwirkung auf den Mitnahmevorsprung 50 des Drehblockier-Eingriffsteils 43 ausgebildet ist. Der so gestaltete federnde Hebelarm 68 wirkt auf die dem ersten Beaufschlagungsende 55 des Hebelteils 41 abgewandte Seite des Mitnahmevorsprungs 50.

Die beiden Federn 58 und 59 wirken somit jeweils mit einem Federschenkel 63, 64 auf das Hebelteil 41 ein, wobei weiter beide Federn 58 und 59 in der insbesondere in den Figuren 23 bis 25 dargestellten Neutral- beziehungsweise Ausgangsstellung bevorzugt und im Wesentlichen entspannt sind, entsprechend nicht oder nicht wesentlich mit einer Federkraft auf das Hebelteil 41 und/oder das Drehblockier-Eingriffsteil 43 einwirkend.

Unter, gegebenenfalls anschlagbegrenzter, Drehverlagerung des Schaltnockens 10 in Richtung d (vergleiche Figur 26) wird eine Schaltstellung erreicht, in welcher zufolge Absenkung des Schaltstößels 12 in Bewegungsrichtung c der Gegennocken 20 an der Steuerfläche 21 zur Anlage kommt. Neben der vorbeschriebenen möglichen Schwenkblockierung der Gabel 3 relativ zum Montagezapfen 4 zufolge Formschlusseingriffs zwischen dem Dreh-Blockierungsteil 30 und den Dreh-Blockierungsvorsprüngen 31 des Rasttellers 26 ergibt sich weiter über das mitgeschleppte Stößelteil 33 und den Stößelfortsatz 35 sowie über dessen Steuerfläche 40 eine Beaufschlagung des zweiten Beaufschlagungsendes 56 des Hebelteils 41.

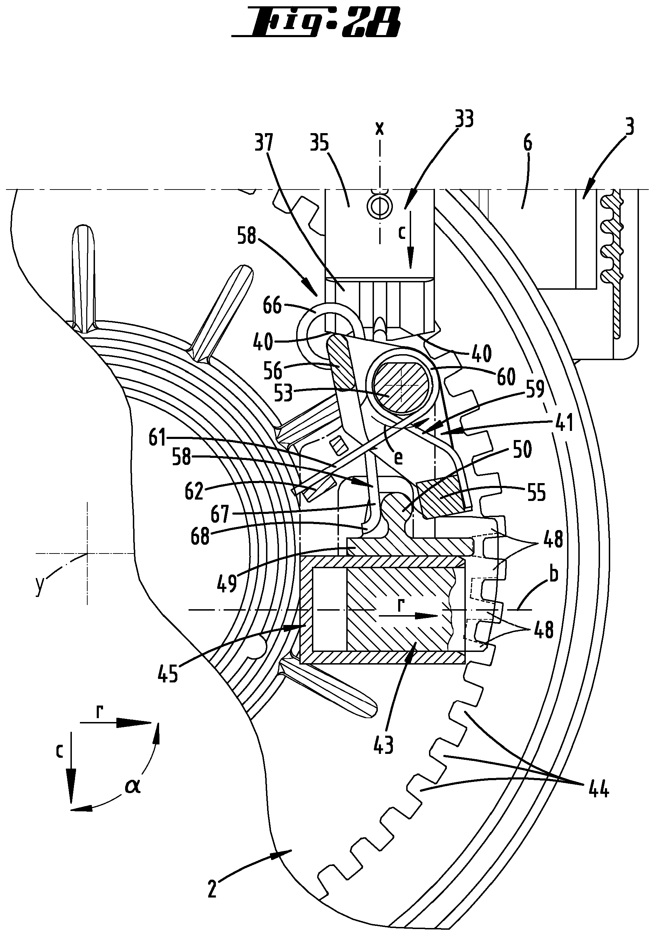

Im Zuge dieser Absenkbewegung wird das Hebelteil 41 um dessen Schwenkachse z in Pfeilrichtung e (vergleiche Figur 28) schwenkverlagert, wobei über den durch den Federschenkel 67 gebildeten Hebelarm 68 der ersten Feder unter Anlage an dem Mitnahmevorsprung 50 das Drehblockier-Eingriffsteil 43 linear in Verlagerungsrichtung r bewegt wird. Bevorzugt ergibt sich zwischen den Federschenkeln 67 und 64 der ersten Feder 58 im Zuge des Mitschleppens des Drehblockier-Eingriffsteils 43 - zumindest bis hin zu einer möglichen Blockierungsstellung des Drehblockier-Eingriffsteils 43 - keine oder keine maßgebliche Winkeländerung. Vielmehr verbleibt die erste Feder 58 bevorzugt bis hin zu einer Blockierungsstellung im Wesentlichen entspannt.

Das Drehblockier-Eingriffsteil 43 wird über die erste Feder 58, insbesondere über den federnd ausgebildeten Hebelarm 68, in Richtung auf eine Formschlussstellung mit der Verzahnung 44 des Laufrades 2 bewegt. In einer solchen Formschlussstellung greifen die Sperrzähne 48 des Drehblockier-Eingriffsteils 43 in die Verzahnung 44 des Laufrads 2 ein, sodass letzteres drehblockiert ist (siehe auch Figur 27).

Im Zuge der herbeigeführten Schwenkverlagerung des Hebelteils 41 in Richtung auf die Feststellstellung ergibt sich eine Spannung der zweiten Feder 59, welche weiter in Art einer Rückstellfeder für das Hebelteil 41 wirkt. Bei einer, wie vorbeschriebenen, quasi widerstandsfreien Einnahme der Formschlussstellung ist bezüglich der Formschluss-Feststelleinrichtung 14 allein die Kraft der zweiten Feder 59 zu überwinden.

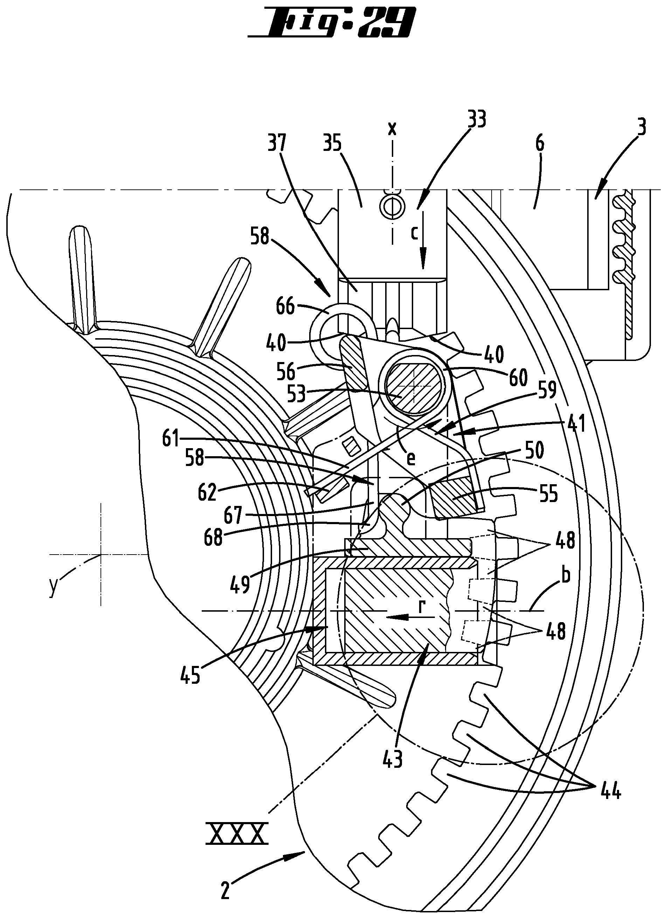

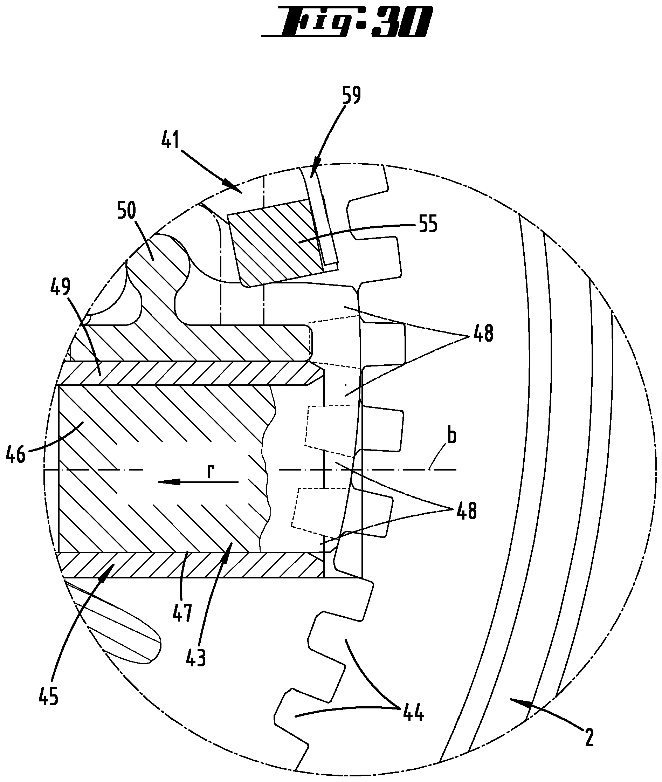

Beim üblichen Gebrauch der Rolle 1 ergibt sich jedoch wiederholt der Zustand, dass im Zuge des Versuchs der Einnahme der Feststellstellung die Sperrzähne 48 des Drehblockier-Eingriffsteils 43 blockierend gegen die Zähne der Verzahnung 44 am Laufrad 2 treten (vergleiche die Darstellung in den Figuren 29 und 30). Die vorgeschlagene Lösung lässt aber auch dabei, trotz der vollständigen Verlagerungshinderung des Drehblockier-Eingriffsteils 43, eine vollständige Verlagerung von Schaltstößel 12 und Stößelteil 13 sowie eine vollständige Drehverlagerung des Hebelteils 41 zu. Lediglich der auf den Mitnahmevorsprung 50 des Drehblockier-Eingriffsteils 43 einwirkende, den Hebelarm 68 bildende Federschenkel 67 weicht zufolge der Blockierung aus, womit in der ersten Feder 58, welche grundsätzlich stärker ausgelegt ist als die zweite Feder 59, eine Federkraft aufgebaut wird. Bevorzugt wird diese, eine Kraftreserve bildende Federkraft allein nur in einer solchen Blockierungsstellung ("Zahn-auf-Zahn") aufgebaut. Durch eine nachträgliche Drehverlagerung des Laufrads 2 um einen oder zwei Winkelgrade ist so eine selbsttätige Einnahme der Feststellstellung unter Abbau der Federspannung der ersten Feder 58 weiterhin gegeben.

Zur Aufhebung dieser Feststellstellung (und gegebenenfalls der Schwenkfeststellung) wird der Schaltnocken 10 entgegen der Drehrichtung d zurückverlagert, unter Einfahren des Gegennockens 20 in eine der Steuermulden 22 oder 23, wobei sich entsprechend zufolge Einwirkung über die erste Rückstellfeder 19 der Schaltstößel 12 und über die zweite Rückstellfeder 42 das Stößelteil 33 mit Bezug auf die Darstellungen nach oben zurückverlagern. Das Hebelteil 41 kann zufolge fehlender Abstützung des zweiten Beaufschlagungsendes 56 an dem zugeordneten Stößelfortsatz 35 unter Freigabe der Federkraft der zweiten Feder 59 entgegen der Drehrichtung e zurückschwenken, wobei über das sich an dem Mitnahmevorsprung 50 abstützende erste Beaufschlagungsende 55 das Drehblockier-Eingriffsteil 43 linear in Verlagerungsrichtung r zurückgedrängt wird. Die Sperrzähne 48 verlassen den Bereich der Verzahnung 44, wonach das Laufrad 2 wieder frei um dessen Drehachse y drehbar ist. Aufgrund der bevorzugt spannungsfreien Anordnung der ersten Feder 58 ergibt sich im Zuge dieser gesteuerten Rückverlagerung des Drehblockier-Eingriffsteils 43 über das Hebelteil 41 keine oder keine maßgebliche Überwin-dung einer sich in der ersten Feder 58 einstellenden und sich der Rückverlagerung entgegenstellenden Kraft.

Bevorzugt ist die Ausgangsstellung insbesondere des Drehblockier-Eingriffsteils anschlagbegrenzt.

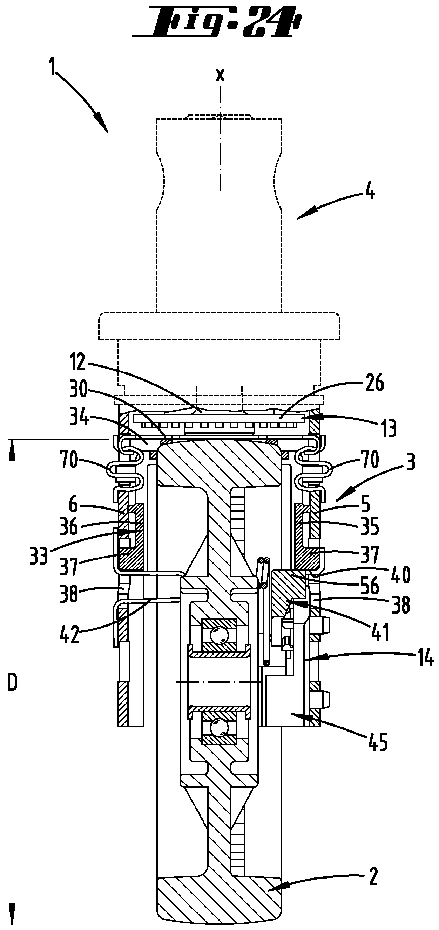

Wie aus der Schnittdarstellung in Figur 24 zu erkennen, ist die zweite Rückstellfeder 42 mit Bezug auf eine senkrecht zur Drehachse y betrachtete Laufrad-Mittelebene der Formschluss-Feststelleinrichtung 14 gegenüberliegend angeordnet, sodass diese zweite Rückstellfeder 42 mit einem Federschenkel der bevorzugt ausgebildeten Haarnadelfeder unterseitig gegen den freiliegenden Stößelfortsatz 36 wirkt.

Weiter sind die Stößelfortsätze 35 und 36 der in den Figuren 1 bis 30 dargestellten ersten Ausführungsform ausgehend von dem Brückenabschnitt 34 im Wesentlichen mit gleicher Länge l ausgebildet (vergleiche Figur 22).

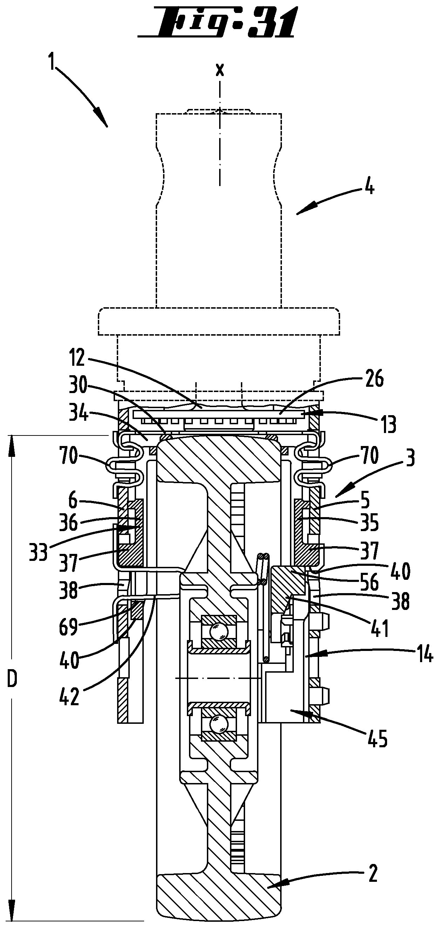

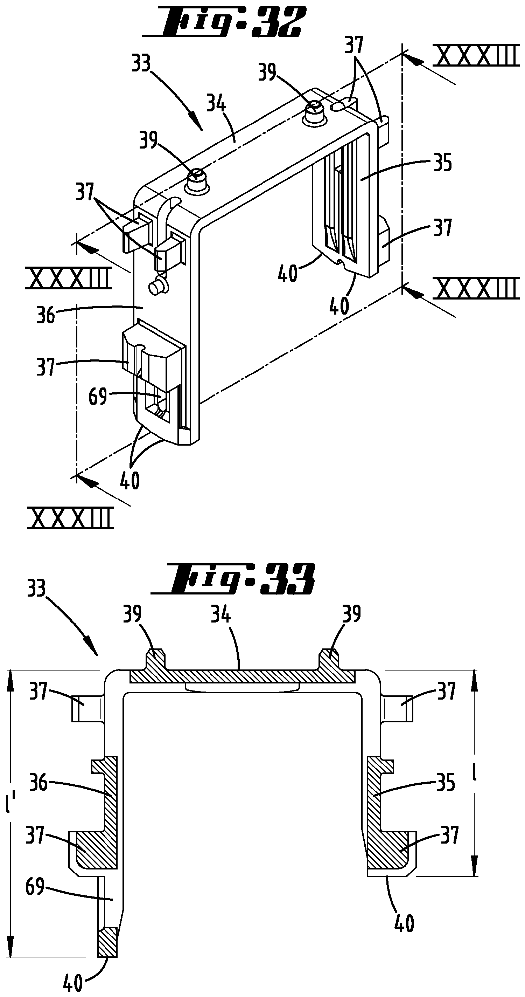

Die Figuren 31 bis 34 zeigen eine weitere Ausführungsform bezüglich des Stößelteils 43, bei welcher ein Stößelfortsatz 36 mit einer Länge l' versehen ist, die größer gewählt ist als die Länge l des weiteren Stößelfortsatzes 35. So kann der Stößelfortsatz 36 beispielsweise eine Länge l' aufweisen, die etwa dem 1,2- bis etwa dem 1,6-Fachen, weiter Beispiel etwa dem 1,4-Fachen der Länge l des kürzeren Stößelfortsatzes 35 entsprechen kann.

Beide Stößelfortsätze 35 und 36 sind bevorzugt unterseitig mit den vorbeschriebenen Steuerflächen 40 ausgebildet.

Figur 31 zeigt eine Anordnung eines derart gestalteten Stößelteils 33, bei welcher das Stößelteil 33 so ausgerichtet ist, dass - gemäß der vorbeschriebenen ersten Ausführungsform - der mit der Länge l versehene kürzere Stößelfortsatz 35 zur Einwirkung auf das Hebelteil 41 angeordnet ist, während der längere Stößelfortsatz 36 mit der Länge l' der zweiten Rückstellfeder 42 zugeordnet angeordnet ist. Bei gleicher Positionierung der zweiten Rückstellfeder 42 innerhalb des zugeordneten Gabel-Schalenteils 6 ist zur Zusammenwirkung mit der zweiten Rückstellfeder 42 in dem längeren Stößelfortsatz 36 eine Durchgriffsöffnung 69 vorgesehen.

Diese vorbeschriebene Anordnung ist gewählt für eine Rolle 1 mit einem ein Durchmessermaß D aufweisenden Laufrad 2.

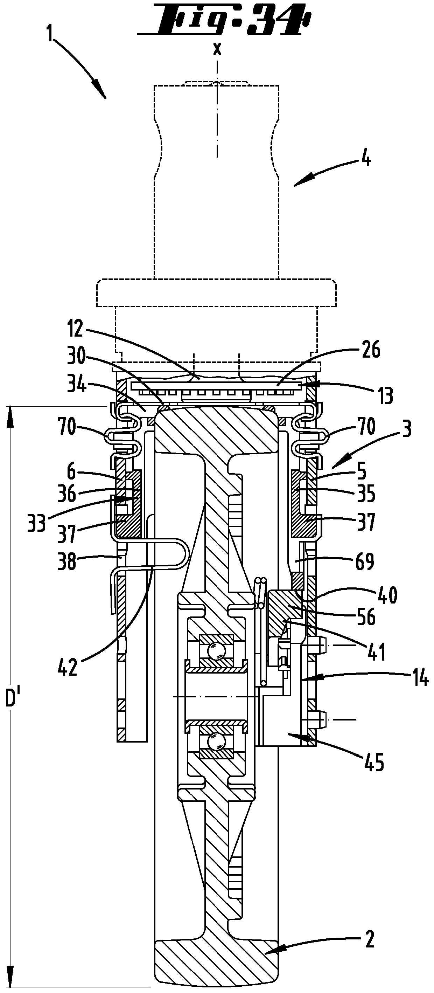

Durch eine relativ zu den weiteren Bauteilen der Formschluss-Feststelleinrichtung 14 gedrehte Anordnung des Stößelteils 33 um - mit Bezug auf die Schwenkachse x - 180 Grad ist unter Nutzung im Wesentlichen gleicher Bauteile (mit Ausnahme insbesondere der Gabel 3 und des Laufrades 2) auch eine Rolle 1 mit einem Laufrad 2 bestückbar, welches Laufrad 2 mit einem gegenüber der Ausführung gemäß Figur 31 vergrößerten Durchmesser D' versehen ist (vergleiche Figur 34). So ergibt sich bei einem durchmessergrößeren Laufrad 2 gemäß Figur 34 eine Anordnung, bei welcher der längere Stößelfortsatz 36 zur Einwirkung auf das Hebelteil 41 angeordnet ist und an dem kürzeren Stößelfortsatz 35 unterseitig die zweite Rückstellfeder 42 anliegt.

Insbesondere das Hebelteil 41, das Drehblockier-Eingriffsteil 43, das Halterungsteil 45, die zweite Rückstellfeder 42 sowie die Federn 58 und 59 und darüber hinaus das asymmetrisch gestaltete Stößelteil 33 können in vorteilhafter Weise, wie weiter bevorzugt auch die wesentlichen Teile zur Bildung des Montagezapfens 4 und die Komponenten zur Drehblockierung für beide Laufrad-Durchmesser D und D' genutzt werden.

### Liste der Bezugszeichen

| | | | |
|---|---|---|---|
| 1 | Rolle | 28 | Richtungs-Feststellungsteil |
| 2 | Laufrad | 29 | Lager |
| 3 | Gabel | 30 | Dreh-Blockierungsteil |
| 4 | Montagezapfen | 31 | Dreh-Blockierungsvorsprung |
| 5 | Gabel-Schalenteil | 32 | Fortsatz |
| 6 | Gabel-Schalenteil | 33 | Stößelteil |
| 7 | Gabelschenkel | 34 | Brückenabschnitt |
| 8 | Gabelhöhlung | 35 | Stößelfortsatz |
| 9 | Hohlachse | 36 | Stößelfortsatz |
| 10 | Schaltnocken | 37 | Führungsvorsprung |
| 11 | Kupplungsöffnung | 38 | Führungsöffnung |
| 12 | Schaltstößel | 39 | Zapfen |
| 13 | Schwenk-Feststelleinrichtung | 40 | Steuerfläche |
| 14 | Formschluss-Feststelleinrichtung | 41 | Hebelteil |
| | | 42 | zweite Rückstellfeder |
| 15 | Gehäuseschale | 43 | Drehblockier-Eingriffsteil |
| 16 | Gang | 44 | Verzahnung |
| 17 | Nockenteil | 45 | Halterungsteils |
| 18 | Ringkragen | 46 | Gleitfortsatz |
| 19 | erste Rückstellfeder | 47 | Gleitaufnahme |
| 20 | Gegennocken | 48 | Sperrzahn |
| 21 | Steuerfläche | 49 | Stützabschnitt |
| 22 | Steuermulde | 50 | Mitnahmevorsprung |
| 23 | Steuermulde | 51 | Befestigungszapfen |
| 24 | Anschlagvorsprung | 52 | Aufnahmeöffnung |
| 25 | Umfangsnut | 53 | Halterungszapfen |
| 26 | Rastteller | 54 | Zapfenaufnahme |
| 27 | Rastausformung | 55 | erstes Beaufschlagungsende |
| 56 | zweites Beaufschlagungsende | y | Drehachse |
| 57 | Anlageblock | z | Schwenkachse |
| 58 | erste Feder | | |
| 59 | zweite Feder | | |
| 60 | Windungsabschnitt | D | Durchmesser |
| 61 | Federschenkel | D' | Durchmesser |
| 62 | Stützbock | | |
| 63 | Federschenkel | | |
| 64 | Federschenkel | α | Winkel |
| 65 | Nut | | |
| 66 | Windungsabschnitt | | |
| 67 | Federschenkel | | |
| 68 | Hebelarm | | |
| 69 | Durchgriffsöffnung | | |
| 70 | Federelement | | |
| a | Betätigungsachse | | |
| b | Linie | | |
| c | Bewegungsrichtung | | |
| d | Drehrichtung | | |
| e | Drehrichtung | | |
| l | Länge | | |
| l' | Länge | | |
| r | Verlagerungsrichtung | | |
| x | Schwenkachse | | |

## Patentansprüche

1. Formschluss-Feststelleinrichtung (14) für eine Rolle (1), mit einem Laufrad (2), einer Gabel (3) und einem Drehblockier-Eingriffsteil (43), wobei das Laufrad (2) der Rolle (1) mit Bezug auf eine geometrische Laufradachse (y) über die Formschluss-Feststelleinrichtung (14) drehblockierbar ist, wobei weiter zur Verlagerung des Drehblockier-Eingriffsteils (43) aus einer Ausgangsstellung in eine Eingriffsstellung eine erste Feder (58) auf das Drehblockier-Eingriffsteil (43) einwirkt und an einem verschwenkbaren Hebelteil (41) gehaltert ist, **dadurch gekennzeichnet, dass** die erste Feder (58) einen Hebelarm (68) bildet, der Teil der ersten Feder (58) ist und entsprechend selbst federbar ist, dass mit der Verlagerung des Drehblockier-Eingriffsteils (43) in die Eingriffsstellung eine zweite, an dem Hebelteil (41) gehalterte, Feder (59) zur Rückbewegung in die Ausgangsstellung spannbar ist und dass die erste Feder (58) stärker ist als die zweite Feder (59).

2. Formschluss-Feststelleinrichtung nach Anspruch 1, **dadurch gekennzeichnet, dass** in der Ausgangsstellung sowohl die erste Feder (58) als auch die zweite Feder (59) im Wesentlichen entspannt sind.

3. Formschluss-Feststelleinrichtung nach einem der vorhergehenden Ansprüche, **dadurch gekennzeichnet, dass** die erste Feder (58) als Schenkelfeder ausgebildet ist.

4. Formschluss-Feststelleinrichtung nach einem der vorhergehenden Ansprüche, **dadurch gekennzeichnet, dass** die zweite Feder (59) als Schenkelfeder ausgebildet ist

5. Formschluss-Feststelleinrichtung nach einem der vorhergehenden Ansprüche, **dadurch gekennzeichnet, dass** die zweite Feder (59) zwischen dem Hebelteil (41) und einem gabelfesten Halterungsteil (45) wirkt.

6. Formschluss-Feststelleinrichtung nach einem der vorhergehenden Ansprüche, **dadurch gekennzeichnet, dass** die erste Feder (58) und die zweite Feder (59) jeweils einendig auf das Hebelteil (41) wirken, wobei, bevorzugt, die erste Feder (58) allein zwischen dem Hebelteil (41) und dem Drehblockier-Eingriffsteil (43) wirkt.

7. Formschluss-Feststelleinrichtung nach einem der vorhergehenden Ansprüche, **dadurch gekennzeichnet, dass** die zweite Feder (59) einen Halterungszapfen (53) des Hebelteils (41) umfasst.

8. Formschluss-Feststelleinrichtung nach einem der vorhergehenden Ansprüche, **dadurch gekennzeichnet, dass** die erste Feder (58) in einer Nut (65) des Hebelteils (41) geführt ist.

9. Formschluss-Feststelleinrichtung nach einem der vorhergehenden Ansprüche, **dadurch gekennzeichnet, dass** das Hebelteil (41) zwei Beaufschlagungsenden (55, 56) aufweist.

10. Formschluss-Feststelleinrichtung (14) für eine Rolle (1), mit einem Laufrad (2), einer Gabel (3) und einem Drehblockier-Eingriffsteil (43), wobei das Laufrad (2) der Rolle (1) mit Bezug auf eine geometrische Laufradachse (y) über die Formschluss-Feststelleinrichtung (14) drehblockierbar ist, wobei weiter zur Verlagerung des Drehblockier-Eingriffsteils (43) aus einer Ausgangsstellung in eine Eingriffsstellung und/oder aus der Eingriffsstellung in die Ausgangsstellung das Drehblockier-Eingriffsteil (43) über ein Hebelteil (41) betätigbar ist, wobei weiter das Hebelteil (41) mittels eines Stößelteils (33) beaufschlagbar ist und das Stößelteil (33) gabelförmig gebildet ist, mit unterschiedlich langen Stößelfortsätzen (35, 36), wobei nur ein Stößelfortsatz (35, 36) zur Einwirkung auf das Hebelteil (41) angeordnet ist, **dadurch gekennzeichnet, dass** die Stößelfortsätze (35, 36) sich bei einer üblichen Ausrichtung der Rolle (1) im Wesentlichen in vertikaler Richtung erstrecken und dass die Stößelfortsätze (35, 36) sich beidseitig und entlang einer Montagezapfenachse eines Montagezapfens, der eine geometrische Schwenkachse umgibt, erstrecken.

11. Formschluss-Feststelleinrichtung nach Anspruch 10, **dadurch gekennzeichnet, dass** das Stößelteil (33) durch einen Schaltstößel (12) beaufschlagbar ist.

12. Formschluss-Feststelleinrichtung nach einem der Ansprüche 10 oder 11, **dadurch gekennzeichnet, dass** das Stößelteil (33) mit einer zweiten Rückstellfeder (42) in Zusammenwirkung ist.

13. Formschluss-Feststelleinrichtung nach einem der Ansprüche 10 bis 12, **dadurch gekennzeichnet, dass** der Schaltstößel (12) mit einer ersten Rückstellfeder (19) in Zusammenwirkung ist.

14. Formschluss-Feststelleinrichtung nach einem der Ansprüche 12 oder 13, **dadurch gekennzeichnet, dass** die zweite Rückstellfeder (42) nur mit einem der Stößelfortsätze (35, 36) unmittelbar zusammenwirkt und der andere Stößelfortsatz (35, 36) ohne eine unmittelbare Beaufschlagung durch eine Rückstellfeder ist wobei, bevorzugt, der längere Stößelfortsatz (36) eine Durchgriffsöffnung (69) für die zweite Rückstellfeder (42) aufweist.

15. Formschluss-Feststelleinrichtung nach einem der Ansprüche 10 bis 14, **dadurch gekennzeichnet, dass** die Montagezapfenachse einen U-Steg des Stößelteils (33) im Wesentlichen mittig durchsetzt.

## Claims

1. Positive locking brake device (14) for a caster (1), comprising a wheel (2), a fork (3), and a rotational-locking engagement member (43), wherein the wheel (2) of the caster (1) is lockable in rotation relative to a geometrical wheel axis (y) by means of the positive locking brake device (14), wherein, for displacement of the rotational-locking engagement member (43) from a released position into an engagement position, a first spring (58) acts upon the rotational-locking engagement member (43) and is supported on a pivotable lever member (41), **characterized in that** the first spring (58) forms a lever arm (68) which constitutes part of the first spring (58) and is therefore resilient itself, that upon displacement of the rotational-locking engagement member (43) into the engagement position a second spring (59), supported on the lever member (41), is tensioned for return movement into the released position, and that the first spring (58) is stronger than the second spring (59).

2. The positive locking brake device according to claim 1, **characterized in that** both the first spring (58) and the second spring (59) are substantially relaxed in the released position.

3. The positive locking brake device according to any one of the preceding claims, **characterized in that** the first spring (58) is designed as a torsion spring.

4. The positive locking brake device according to any one of the preceding claims, **characterized in that** the second spring (59) is designed as a torsion spring.

5. The positive locking brake device according to any one of the preceding claims, **characterized in that** the second spring (59) acts between the lever member (41) and a fork-fixed support portion (45).

6. The positive locking brake device according to any one of the preceding claims, **characterized in that** the first spring (58) and the second spring (59) each act on the lever member (41) at one end, wherein preferably the first spring (58) acts exclusively between the lever member (41) and the rotational-locking engagement member (43).

7. The positive locking brake device according to any one of the preceding claims, **characterized in that** the second spring (59) surrounds a support pin (53) of the lever member (41).

8. The positive locking brake device according to any one of the preceding claims, **characterized in that** the first spring (58) is guided in a groove (65) of the lever member (41).

9. The positive locking brake device according to any one of the preceding claims, **characterized in that** the lever member (41) comprises two actuation ends (55, 56).

10. Positive locking brake device (14) for a caster (1), comprising a wheel (2), a fork (3), and a rotational-locking engagement member (43),wherein the wheel (2) of the caster (1) is lockable in rotation relative to a geometrical wheel axis (y) by means of the positive locking brake device (14), wherein, for displacement of the rotational-locking engagement member (43) from a released position into an engagement position and/or from the engagement position back into the released position, the rotational-locking engagement member (43) is actuatable via a lever member (41),wherein the lever member (41) is actuatable by means of a plunger member (33), and wherein the plunger member (33) is forkshaped and comprises plunger projections (35, 36) of different lengths, of which only one plunger projection (35, 36) is arranged to act upon the lever member (41), **characterized in that** the plunger projections (35, 36) extend, in a usual orientation of the caster (1), substantially in a vertical direction, and that the plunger projections (35, 36) extend on both sides of and along a mounting-pin axis of a mounting pin which surrounds a geometrical swivel axis.

11. The positive locking brake device according to claim 10, **characterized in that** the plunger member (33) is actuatable by a switching plunger (12).

12. The positive locking brake device according to any one of claims 10 or 11, **characterized in that** the plunger member (33) interacts with a second return spring (42).

13. The positive locking brake device according to any one of claims 10 to 12, **characterized in that** the switching plunger (12) interacts with a first return spring (19).

14. The positive locking brake device according to any one of claims 12 or 13, **characterized in that** the second return spring (42) acts directly only on one of the plunger projections (35, 36,and that the other plunger projection (35, 36) is free from direct bias by a return spring, wherein preferably the longer plunger projection (36) comprises a through-opening (69) for the second return spring (42).

15. The positive locking brake device according to any one of claims 10 to 14, **characterized in that** the mounting-pin axis passes substantially centrally through a U-web of the plunger member (33).

## Revendications

1. Dispositif de freinage à verrouillage positif (14) pour une roue pivotante (1), comprenant une roue (2), une fourche (3) et un organe d'engrènement de blocage en rotation (43), la roue (2) de la roue pivotante (1) pouvant être bloquée en rotation par rapport à un axe géométrique de roue (y) au moyen du dispositif de freinage à verrouillage positif (14), un premier ressort (58) agissant sur l'organe d'engrènement de blocage en rotation (43) afin de déplacer celui-ci d'une position libérée vers une position d'engrènement et étant supporté par un organe de levier pivotant (41), **caractérisé en ce que** le premier ressort (58) forme un bras de levier (68) constituant une partie du premier ressort (58) et étant par conséquent lui-même élastique, **en ce que**, lors du déplacement de l'organe d'engrènement de blocage en rotation (43) vers la position d'engrènement, un second ressort (59), supporté par l'organe de levier (41), est tendu afin d'assurer le retour en position libérée, et **en ce que** le premier ressort (58) est plus fort que le second ressort (59).

2. Dispositif de freinage à verrouillage positif selon la revendication 1, **caractérisé en ce que** le premier ressort (58) et le second ressort (59) sont sensiblement détendus en position libérée.

3. Dispositif de freinage à verrouillage positif selon l'une quelconque des revendications précédentes, **caractérisé en ce que** le premier ressort (58) est formé d'un ressort de torsion.

4. Dispositif de freinage à verrouillage positif selon l'une quelconque des revendications précédentes, **caractérisé en ce que** le second ressort (59) est formé d'un ressort de torsion.

5. Dispositif de freinage à verrouillage positif selon l'une quelconque des revendications précédentes, **caractérisé en ce que** le second ressort (59) agit entre l'organe de levier (41) et une partie de support (45) fixée à la fourche.

6. Dispositif de freinage à verrouillage positif selon l'une quelconque des revendications précédentes, **caractérisé en ce que** le premier ressort (58) et le second ressort (59) agissent chacun à une extrémité sur l'organe de levier (41), le premier ressort (58) agissant de préférence uniquement entre l'organe de levier (41) et l'organe d'engrènement de blocage en rotation (43).

7. Dispositif de freinage à verrouillage positif selon l'une quelconque des revendications précédentes, **caractérisé en ce que** le second ressort (59) entoure un axe de support (53) de l'organe de levier (41).

8. Dispositif de freinage à verrouillage positif selon l'une quelconque des revendications précédentes, **caractérisé en ce que** le premier ressort (58) est guidé dans une rainure (65) de l'organe de levier (41).

9. Dispositif de freinage à verrouillage positif selon l'une quelconque des revendications précédentes, **caractérisé en ce que** l'organe de levier (41) comprend deux extrémités d'actionnement (55, 56).

10. Dispositif de freinage à verrouillage positif (14) pour une roue pivotante (1), comprenant une roue (2), une fourche (3) et un organe d'engrènement de blocage en rotation (43), la roue (2) de la roue pivotante (1) pouvant être bloquée en rotation par rapport à un axe géométrique de roue (y) au moyen du dispositif de freinage à verrouillage positif (14), l'organe d'engrènement de blocage en rotation (43) pouvant être actionné au moyen d'un organe de levier (41) pour être déplacé d'une position libérée vers une position d'engrènement et/ou inversement, l'organe de levier (41) pouvant être actionné au moyen d'un organe de poussoir (33), l'organe de poussoir (33) étant formé en forme de fourche et comportant des prolongements de poussoir (35, 36) de longueurs différentes, dont un seul (35, 36) est disposé pour agir sur l'organe de levier (41), **caractérisé en ce que** les prolongements de poussoir (35, 36) s'étendent, dans l'orientation normale de la roue pivotante (1), sensiblement dans une direction verticale, et **en ce que** les prolongements de poussoir (35, 36) s'étendent de part et d'autre et le long d'un axe de goupille de montage d'une goupille de montage entourant un axe de pivotement géométrique.

11. Dispositif de freinage à verrouillage positif selon la revendication 10, **caractérisé en ce que** l'organe de poussoir (33) peut être actionné par un poussoir de commande (12).

12. Dispositif de freinage à verrouillage positif selon l'une quelconque des revendications 10 ou 11, **caractérisé en ce que** l'organe de poussoir (33) coopère avec un second ressort de rappel (42).

13. Dispositif de freinage à verrouillage positif selon l'une quelconque des revendications 10 à 12, **caractérisé en ce que** le poussoir de commande (12) coopère avec un premier ressort de rappel (19).

14. Dispositif de freinage à verrouillage positif selon l'une quelconque des revendications 12 ou 13, **caractérisé en ce que** le second ressort de rappel (42) agit directement uniquement sur l'un des prolongements de poussoir (35, 36), et **en ce que** l'autre prolongement de poussoir (35, 36) n'est pas soumis directement à une force de ressort de rappel, le prolongement de poussoir le plus long (36) comprenant de préférence une ouverture traversante (69) pour le second ressort de rappel (42).

15. Dispositif de freinage à verrouillage positif selon l'une quelconque des revendications 10 à 14, **caractérisé en ce que** l'axe de goupille de montage traverse substantiellement au centre une paroi en U de l'organe de poussoir (33) raverse sensiblement au centre une traverse en U de la partie poussoir (33).
